(19) Europäisches Patentamt

European Patent Office

Office européen des brevets

(11) **EP 4 122 604 A2**

(12) **EUROPÄISCHE PATENTANMELDUNG**

(43) Veröffentlichungstag:
**25.01.2023 Patentblatt 2023/04**

(21) Anmeldenummer: **22182285.1**

(22) Anmeldetag: **30.06.2022**

(51) Internationale Patentklassifikation (IPC):
**B01L 3/02** *(2006.01)*   **B01L 3/00** *(2006.01)*
**F16K 11/074** *(2006.01)*   **F16K 11/085** *(2006.01)*
**G01N 35/10** *(2006.01)*

(52) Gemeinsame Patentklassifikation (CPC):
**B01L 3/567; B01L 3/0265; B01L 3/0293;**
**F16K 11/0743; F16K 11/085; G01N 35/1097;**
B01L 2200/028; B01L 2200/0673; B01L 2200/141;
B01L 2300/0829; B01L 2400/0622; B01L 2400/0644

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**
Benannte Erstreckungsstaaten:
**BA ME**
Benannte Validierungsstaaten:
**KH MA MD TN**

(30) Priorität: **30.06.2021   DE 102021116887**

(71) Anmelder: **Institut für Bioprozess- und Analysenmesstechnik e.V.**
**37308 Heilbad Heiligenstadt (DE)**

(72) Erfinder:
• **Dr. WIEDEMEIER, Stefan**
**37520 Osterode (DE)**
• **Dr. GASTROCK, Gunter**
**37308 Heilbad Heiligenstadt, (DE)**
• **Dr. LEMKE, Karen**
**37073 Göttingen (DE)**
• **RÖMER, Robert**
**37308 Heilbad Heiligenstadt (DE)**
• **SAUPE, Mario**
**37308 Heilbad Heiligenstadt, (DE)**

(74) Vertreter: **Maikowski & Ninnemann Patentanwälte Partnerschaft mbB**
**Postfach 15 09 20**
**10671 Berlin (DE)**

(54) **ANORDNUNG UND VERFAHREN ZUM GENERIEREN VON FLUIDSEQUENZEN IN EINEM MULTIFLUIDTRANSPORTKANAL UND ZUM KONDITIONIEREN UND DETEKTIEREN DER IN DEM MULTIFLUIDTRANSPORTKANAL GENERIERTEN FLUIDSEQUENZEN**

(57) Die Erfindung betrifft ein Umlenkmodul, aufweisend

• einen Anschlussstator, aufweisend die Form eines Hohlzylinders mit einer geschlossenen Grundfläche;
• einen Grundflächenkanal, der zentrisch in der Grundfläche des Anschlussstators angeordnet ist;
• n Mantelflächenkanäle oder Bodenkanäle;
• ein Schaltrotor, aufweisend einen Transportkanal, n-1 Schließzylinder, wobei $n \in N$;
• einen Statordeckel;
• Dichtelemente zur Gewährleistung aseptischer Bedingungen;

• eine Schaltachse mit einer Achsenkupplung; wobei der Schaltrotor durch die Schaltachsen mit der Achsenkupplung verbunden ist und drehbar axial in dem Anschlussstator angeordnet ist.

Die Erfindung betrifft weiterhin eine Anordnung und ein Verfahren zum Generieren von Fluidsequenzen, bestehend aus Fluidkompartimenten, eingebettet in mindestens ein weiteres, mit den Fluidkompartimenten nicht mischbares Fluid, in mindestens einem Multifluidtransportkanal und / oder zum Konditionieren und / oder Detektieren der in dem Multifluidtransportkanal generierten Fluidsequenzen.

**EP 4 122 604 A2**

**Beschreibung**

Die Erfindung betrifft ein Umlenkmodul, aufweisend

- einen Anschlussstator, aufweisend die Form eines Hohlzylinders mit einer geschlossenen Grundfläche;
- einen Grundflächenkanal, der zentrisch in der Grundfläche des Anschlussstators angeordnet ist;
- n Mantelflächenkanäle oder Bodenkanäle;
- ein Schaltrotor, aufweisend einen Transportkanal, n-1 Schließzylinder, wobei $n \in N$;
- einen Statordeckel;
- Dichtelemente zur Gewährleistung aseptischer Bedingungen;
- eine Schaltachse mit einer Achsenkupplung; wobei der Schaltrotor durch die Schaltachsen mit der Achsenkupplung verbunden ist und drehbar axial in dem Anschlussstator angeordnet ist.

Die Erfindung betrifft weiterhin eine Anordnung und ein Verfahren zum Generieren von Fluidsequenzen, bestehend aus Fluidkompartimenten, eingebettet in mindestens ein weiteres, mit den Fluidkompartimenten nicht mischbares Fluid, in mindestens einem Multifluidtransportkanal und / oder zum Konditionieren und / oder Detektieren der in dem Multifluidtransportkanal generierten Fluidsequenzen.

**Hintergrund der Erfindung**

Die Erfindung liegt auf dem Gebiet der Mikrofluidik und hier insbesondere auf dem Gebiet der tropfenbasierten Mikrofluidik. Die tropfenbasierte Mikrofluidik ist sehr flexibel, vielseitig nutzbar und besitzt einen hohen Grad der Miniaturisierung. Damit ist sie für die Life Science und die Chemie hervorragend geeignet und kann vielfältig eingesetzt werden. Systeme und Verfahren auf Basis mikrofluidischer Konzepte zeichnen sich durch ein großes Anwendungsspektrum aus: von Verfahren zur Modifikation und Analyse von Viren/Phagen, Mikroorganismen, Zellen oder ganzen Zellverbünden bis hin zur Synthese an/organischer Substanzen, Partikeln, Verbindungen und Komplexen.

Die tropfenbasierte Mikrofluidik fasst Technologien zusammen, die zur Bearbeitung von Fluidproben im Picoliter-, Nanoliter und unteren Mikroliterbereich eingesetzt werden. Bei Verfahren der tropfenbasierten Mikrofluidik wird eine Probe nicht wie bei herkömmlichen Verfahren auf Reaktionsgefäße aufgeteilt, sondern in einer mit der Probe nicht mischbaren Phase aliquotiert. Das Aliquotieren der Proben erfolgt in diesem Fall nicht in einzelne Gefäße, sondern durch die mit der Probe nicht mischbaren Phase (Trägerfluid) in einen Mikrokanal, der als Multifluidtransportkanal spezifische geometrische und oberflächenspezifische Eigenschaften aufweist. Durch die Unmischbarkeit beider Phasen (Probemedium hydrophil / Trägerfluid hydrophob oder Probemedium hydrophob und Trägerfluid hydrophil) bilden sich Grenzflächen zwischen den Fluiden. Die aliquotierte Probe liegt somit in Form voneinander getrennter Fluidkompartimente (Mikroreaktoren) im Trägerfluid vor.

Im Gegensatz zu einem integrierten System (z.B. Lab on a Chip) kann die tropfenbasierte Mikrofluidik modular, d.h. auf Basis einer modularen Plattform aufgebaut werden, was eine hohe Flexibilität ermöglicht.

Einzelne Module, die in eine solche Plattform integriert werden können, sind aus dem Stand der Technik bereits bekannt.

EP 2 248 588 A1 offenbart ein montier- und demontierbares Mikrofluidiksystem für das Erzeugen, Kultivieren, Manipulieren, Analysieren und Konservieren von einphasigen und mehrphasigen Fluiden im Mikromaßstab und ein Verfahren zur Flutung des Systems.

DE 10 2011 088 741 A1 offenbart eine Anordnung zur Durchführung eines Verfahrens zum Separieren von Zellen aus einer Zellsuspension, vorzugsweise von Blutzellen, wobei in der Zellsuspension befindliche Zielzellen mit Magnetbeads markiert und anschließend separiert werden, aufweisend eine Zweifluidsonde, einen Inkubationsleiter, in dem eine Inkubation stattfindet, ein Mikrokanal-Netzwerk, und eine bewegliche Magnetanordnung.

EP 2 156 890 A2 betrifft eine Anordnung und ein Verfahren zum Kompartimentieren und zum Manipulieren von Kompartimenten. Dabei werden stabile Mikrosphären aus einem gasförmigen oder flüssigen Fluid erzeugt, die das Probenmaterial, wie beispielsweise an/organische Substanzen in beliebigen Aggregatzuständen, bioaktive Moleküle oder auch Zellen oder Mikroorganismen enthalten und die durch ein mit dem Mikrosphären nicht mischbares Transportfluid beispielsweise zum Zweck der chemischen, biologischen und physikalischen Reaktion, des Kultivierens, Manipulierens im und mit dem Kompartiment, des Speicherns und der Analyse transportiert werden. Durch die Vereinzelung der Zellen bzw. Mikroorganismen in jeweils einer eigenen Mikrosphäre werden Querkontaminationen ausgeschlossen, und es kann eine individuelle Behandlung beispielsweise mit jeweils speziellen Effektoren, Viren oder eine gezielte Selektion von einzelnen Mikrosphären einschließlich Probenmaterial und ihrer Phasengrenze, verallgemeinernd auch Kompartiment genannt, erfolgen.

WO 2007071374 betrifft eine Vorrichtung für den Transport von mindestens einem Kompartiment in einer Transportflüssigkeit in mindestens einem Transportkanal, wobei in den Transportkanal mindestens ein Zulaufkanal mit einer von der Transportflüssigkeit verschiedenen Flüssigkeit mündet, die durch mindestens eine dem Transportkanal zugeordnete erste Pumpe zum Transport der Transportflüssigkeit, und durch mindestens eine dem Transportkanal und/oder Zulaufkanal zugeordnete Druckmesseinrichtung zur Steuerung der Pumpe gekennzeichnet ist. Es wird weiterhin ein Verfahren zur Bildung und zum Transport von mindestens einem Kompartiment offenbart.

WO 2020/025679 A1 betrifft eine Vorrichtung für die optische Charakterisierung von Fluiden und/oder darin eingeschlossener Objekte in einem Mikrokanal, umfassend eine Messzelle, wobei der Mikrokanal durch die Messzelle geführt wird, dadurch gekennzeichnet, dass die Messzelle mit einer Flüssigkeit gefüllt ist, der Mikrokanal sich innerhalb der Messzelle in der Flüssigkeit befindet, das Fluid und/oder darin eingeschlossene Objekte in dem Mikrokanal bewegbar sind und der Mikrokanal innerhalb der Messzelle und/oder die Messzelle mit dem Mikrokanal manuell oder automatisch bewegbar ist. Die Erfindung betrifft weiterhin eine Messzelle für die Vorrichtung und Verfahren für die optische Charakterisierung von Fluiden und/oder darin eingeschlossener Objekte in einem Mikrokanal mittels der erfindungsgemäßen Vorrichtung.

Bislang wurde jedoch kein System beschrieben, das eine Einrichtung enthält, mit der verschiedene Systemabschnitte unterschiedlicher Funktion derart miteinander gekoppelt werden können, dass ein automatisiertes Umschalten von einem Systemabschnitt zu einem anderen Systemabschnitt erfolgen kann und dabei Kontaminationen des Gesamtsystems vermieden werden können.

**Beschreibung der Erfindung**

Die Aufgabe der Erfindung bestand somit darin, die Nachteile des Standes der Technik zu überwinden und eine Einrichtung zur Kopplung verschiedener Systemabschnitte unterschiedlicher Funktion in einer Mikrofluidikanordnung bereitzustellen. Aufgrund der geometrischen Abmessungen der Fluidkanäle im Bereich von Durchmessern zwischen 100 $\mu$m und 3,2 mm kann die Einrichtung beispielsweise mit feinmechanischen Fertigungsmethoden einschließlich Spritzgussverfahren und 3D-Druckverfahren realisiert werden.

Die Aufgabe der Erfindung wird gelöst durch Bereitstellung eines Umlenkmoduls gemäß Anspruch 1.

**Umlenkmodul**

Die vorliegende Erfindung umfasst ein Umlenkmodul, das einen Anschlussstator umfasst, welcher die Form eines Hohlzylinders mit einem geschlossenen Boden aufweist. Der Anschlussstator des Umlenkmoduls weist bevorzugt ein Material auf, enthalten in der Gruppe aufweisend Polyetheretherketon (PEEK), Polytetrafluorethylen (PTFE) und Kombinationen dieser. Allgemein sollte das Material reibungsarm und formbeständig und, soweit von der Anwendung notwendig, sterilisierbar sein.

Zentrisch im Boden des Anschlussstators ist ein Fluidkanal (Grundflächenkanal) angeordnet. Dieser ist als Bohrung ausgebildet, durch die eine geeignete Zuleitung bzw. Anschlussleitung in das Umlenkmodul eingebracht werden kann. Eine geeignete Zuleitung ist beispielsweise ein Schlauch aus einem hydrophoben Material, da in dem Schlauch wässrige Fluidkompartimente und öligem Trägerfluid transportiert werden. Besonders geeignet ist ein PTFE (Polytetrafluorethylen) Schlauch oder ein FEP (Perfluorethylenpropylen) Schlauch, der mittels einer Verschraubung und gegebenenfalls einem oder mehrerer Dichtelemente fixiert und gegenüber der Umgebung abgedichtet wird. Bei Verwendung von öligen Fluidkompartimenten in einem wässrigen Trägerfluid, sind hydrophile Schläuche besonders geeignet. Erfindungsgemäß kann das Material der Schläuche daher an die beabsichtigte Verwendung des Umlenkmoduls angepasst werden. Dabei weisen insbesondere die Schlauchflächen, die mit dem Trägerfluid in Kontakt kommen, entsprechende Materialien mit hydrophoben oder hydrophilen Eigenschaften auf. Es sei darauf verwiesen, dass sämtliche im folgenden beschriebenen Schläuche, die im Zusammenhang mit dem Umlenkmodul eingesetzt werden, die beschriebenen Eigenschaften aufweisen.

Weiterhin weist das Umlenkmodul n Fluidkanäle (Mantelflächenkanäle oder Bodenkanäle) auf, wobei $n \geq 2$ und $n \in N$. Die Mantelflächenkanäle sind radial in der Mantelfläche des Anschlussstators angeordnet. Die Bodenkanäle sind kreisförmig im Boden des Anschlussstators angeordnet. Es gilt vorzugsweise n = ds / 3,75; $ds_{min}$ = 30 mm), mit ds dem Durchmesser des Schaltrotors, d.h. mit einer Verdopplung des Durchmessers des Hohlzylinders des Anschlussstators kann eine Verdopplung der Anschlusskanäle hervorgerufen werden. Zudem ist ein Minimaldurchmesser $ds_{min}$ des Schaltrotors von 30 mm erforderlich. Die Mantelflächenkanäle sind dabei bevorzugt in Form von Bohrungen durch die Mantelfläche ausgebildet, wobei die Bohrungen durchgängig bis in den offenen Kern des Hohlzylinders reichen. Die Bodenkanäle sind bevorzugt als Bohrungen durch den Boden des Anschlussstators ausgebildet. Wobei die Bohrungen durchgängig durch den Boden verlaufen. Durch die Bohrungen können geeignete Schläuche in das Umlenkmodul eingebracht werden. Geeignete Schläuche sind beispielsweise PTFE oder FEP Schläuche, mittels derer die Tropfensequenzen in das Umlenkmodul oder aus ihm heraus transportiert werden. Bei einem hydrophilen Trägerfluid und hydrophoben Fluidkompartimenten werden wie bereits beschrieben entsprechend vorzugsweise hydrophile Schläuche verwendet.

In einer Ausführungsform der vorliegenden Erfindung weist das Umlenkmodul 2 bis 64 Mantelflächenkanäle oder Bodenkanäle, bevorzugt 2 bis 16, besonders bevorzugt 2 bis 8 Mantelflächenkanäle oder Bodenkanäle auf.

Die Mantelflächenkanäle oder Bodenkanäle sind dabei bevorzugt gleichmäßig in der Mantelfläche oder dem Boden des Anschlussstators ausgebildet. Besonders bevorzugt sind zueinander benachbarte Mantelflächenkanäle oder Bodenkanäle der n Mantelflächenkanäle oder Bodenkanäle in einem Winkel

$$\alpha = \frac{360°}{n} \qquad (1)$$

zueinander angeordnet. Der Winkel $\alpha$ ist definiert als Winkel zwischen benachbarten Mantelflächenkanälen oder Bodenkanälen, wenn diese von der Grundfläche des Anschlussstators aus betrachtet werden. Weist das Umlenkmodul beispielsweise 8 Mantelflächenkanäle oder Bodenkanäle auf, so weisen in dieser Ausführungsform benachbarte Mantelflächenkanäle oder Bodenkanäle einen Winkel $\alpha$ von 45° auf.

Weiterhin weist das Umlenkmodul einen Schaltrotor auf, welcher einen Transportkanal und $n - 1$ Schließzylinder aufweist, wobei $n \in N$. Der Schaltrotor kann einteilig ausgebildet sein oder auch mehrteilig. In einer besonders bevorzugten Ausführungsform ist der Schaltrotor zweiteilig ausgebildet. Diese Ausführungsform hat den Vorteil, dass in jeweils einer Hälfte des Schaltrotors ein halbrunder Transportkanal eingebracht werden kann, beispielsweise durch Fräsen, wobei nach dem Zusammenbau der beiden Hälften ein Transportkanal mit einem kreisförmigen Querschnitt entsteht. Die beiden Hälften können beispielweise durch eine Verschraubung oder durch Justierstifte aneinandergefügt werden.

Der Schaltrotor ist im Wesentlichen zylinderförmig ausgebildet und weist einen derartigen Durchmesser und eine Höhe auf, dass der Schaltrotor in den Hohlraum des Anschlussstators passgenau eingebracht werden kann. Der Schaltrotor ist erfindungsgemäß beweglich, insbesondere drehbar axial in dem Anschlussstator gelagert. Der Schaltrotor wird erfindungsgemäß axial in dem Anschlussstator mit Hilfe des Statordeckels positioniert. Eine Positionierung kann beispielsweise mit Hilfe von mindestens einem Justierstift vorgenommen werden. Bevorzugt werden zwei Justierstifte verwendet. In einer Ausführungsform weist der Statordeckel daher mindestens zwei Bohrungen für zwei Justierstifte auf. Der Anschlussstator weist entsprechend ebenfalls mindestens zwei Bohrungen für zwei Justierstifte auf. Die Justierstifte werden derart in die Bohrung von Statordeckel und Anschlussstator eingebracht, dass der Schaltrotor zwar in dem Anschlussstator positioniert, jedoch in der Drehbewegung nicht behindert wird. Optional kann auf dem Statordeckel ein Radial-Wellendichtringdeckel angeordnet sein. In einer Ausführungsform wird dieser durch Schrauben befestigt. Der Statordeckel und der Anschlussstator werden mittels Schrauben am Antrieb befestigt. Eine Abdichtung zwischen Statordeckel und Anschlussstator erfolgt mit Dichtungselementen, vorzugsweise mittels eines O-Rings und eines Radial-Wellendichtrings.

Der Statordeckel weist bevorzugt ein Material auf, ausgewählt aus der Gruppe enthaltend Polyetheretherketon (PEEK), Polytetrafluorethylen (PTFE) und Kombinationen dieser. Allgemein sollte das Material reibungsarm und formbeständig und, soweit von der Anwendung notwendig, sterilisierbar sein.

Unabhängig davon, ob der Schaltrotor einteilig oder mehrteilig ausgebildet ist, weist der Transportkanal in einer bevorzugten Ausführungsform einen kreisförmigen Querschnitt auf. Der Transportkanal weist bevorzugt genau zwei Enden auf, wobei ein Ende an die Mantelfläche oder an eine Grundfläche des Schaltrotors angrenzt und ein weiteres Ende an die Grundfläche des Schaltrotors, die an den Boden des Anschlussstators angrenzt. Grenzen beide Enden des Transportkanals an eine Grundfläche des Schaltrotors an, so grenzen beide Enden an ein und dieselbe Grundfläche des Schaltrotors an. Diese Grundfläche ist bevorzugt die Grundfläche des Schaltrotors, die an den Boden des Anschlussstators angrenzt. Für eine möglichst störungsfreie Umlenkung eines Fluids, insbesondere einer Tropfensequenz in dem Transportkanal, ist dieser derart ausgebildet, dass der Transportkanal keine Kanten oder enge Radien aufweist. Enge Radien sind Radien, die kleiner sind als der Minimalradius, der eine störungsfreie Tropfenleitung durch das Umlenkmodul ermöglicht. In einer Ausführungsform der vorliegenden Erfindung ist der Radius des Transportkanals r $\geq$ 5mm.

Der Transportkanal in dem Schaltrotor ist derart ausgebildet, dass der Grundflächenkanal im Boden des Anschlussstators einem Ende des Transportkanals des Schaltrotors exakt gegenübersteht und dass ein Mantelflächenkanal oder ein Bodenkanal des Anschlussstators einem weiteren Ende des Transportkanals exakt gegenübersteht.

Indem der Grundflächenkanal einem Ende des Transportkanals exakt gegenübersteht, kann der Übergang von einem Fluid oder einer Tropfensequenz, beispielsweise ausgehend von einem Tropfenmodul, in das Umlenkmodul erfolgen. Besonders bevorzugt sind der Grundflächenkanal und der Transportkanal so ausgebildet, dass diese derart zusammenwirken, dass Unstetigkeiten und/oder ein Versatz zwischen Grundflächenkanal und Transportkanal ausgeschlossen sind. Hierdurch wird vorteilhafterweise vermieden, dass es zu unerwünschten Tropfenvereinigungen oder Verschleppungen zwischen einzelnen Tropfen kommt. Keinerlei Unstetigkeiten und/oder Versatz bedeutet, dass der Grundflächenkanal und der angrenzende Transportkanal identische Formen der Querschnitte, im Falle von runden Kanälen vorzugsweise identische Innendurchmesser aufweisen und sich genau in einer Flucht befinden und somit ein ungehindertes Strömen des Fluids oder der Tropfensequenz gewährleistet wird. Insbesondere ist ein solcher Übergang auch gewährleistet, wenn in dem Grundflächenkanal ein fluidzuführender Schlauch eingebracht ist.

Ein weiteres Ende des Transportkanals steht wiederum exakt einem Mantelflächenkanal oder einem Bodenkanal des Anschlussstators gegenüber. Hier erfolgt der Übergang des durch den Transportkanal geleiteten Fluids in den jeweiligen Mantelflächenkanal oder Bodenkanal. Besonders bevorzugt sind sämtliche Mantelflächenkanäle oder Bodenkanäle und der Transportkanal so ausgebildet, dass diese derart zusammenwirken, dass Unstetigkeiten und/oder ein Versatz zwischen den Mantelflächenkanälen oder den Bodenkanälen und dem Transportkanal ausgeschlossen sind. Hierdurch wird vorteilhafterweise vermieden, dass es zu unerwünschten Tropfenvereinigungen oder Verschleppungen zwischen einzelnen Tropfen kommt. Keinerlei Unstetigkeiten und/oder Versatz bedeutet, dass ein Mantelflächenkanal oder Bodenflächenkanal und der angrenzende Transportkanal identische Formen der Querschnitte, im Falle von runden Kanälen vorzugsweise identische Innendurchmesser aufweisen und sich genau in einer Flucht befinden und so ein ungehindertes Strömen des Fluids oder der Tropfensequenz gewährleistet wird. Insbesondere ist ein solcher Übergang gewährleistet, wenn in dem Mantelflächenkanal oder Bodenflächenkanal ein fluidführender Schlauch eingebracht ist.

Der Schaltrotor weist weiterhin n-1 Schließzylinder auf. Weist der Anschlussstator n Mantelflächenkanäle auf, so sind die n-1 Schließzylinder in der Mantelfläche des Schaltrotors angebracht. Weist der Anschlussstator hingegen Bodenkanäle auf, so sind die n-1 Schließzylinder in der Grundfläche des Schaltrotors angeordnet, die an den Boden des Anschlussstators angrenzt. Die Schließzylinder sind in der Mantelfläche oder Grundfläche des Schaltrotors derart angebracht, dass, wenn der Transportkanal des Schaltrotors einem Mantelflächenkanal oder einem Bodenkanal gegenübersteht, jeweils einer der n-1 Schließzylinder exakt einem Mantelflächenkanal oder einem Bodenkanal des Anschlussstators gegenübersteht und diesen verschließt. Das erfindungsgemäße Umlenkmodul ermöglicht dadurch den Transport eines Fluids oder einer Tropfensequenz vom Grundflächenkanal durch den Transportkanal des Schaltrotors zu genau einem Mantelflächenkanal oder zu genau einem Bodenkanal und andersherum.

In einer bevorzugten Ausführungsform sind die n-1 Schließzylinder vorgespannt, z.B. mit Druckfedern oder Piezoelementen. Die Schließzylinder sind weiterhin bevorzugt einseitig abgerundet, wobei die abgerundete Seite den Mantelflächenkanälen oder Bodenkanälen zugewandt ist, so dass die n-1 Schließzylinder genau n-1 Mantelflächenkanäle oder Bodenkanäle mit der abgerundeten Seite verschließen. Durch die Druckfedern oder die Piezoelemente werden die Schließzylinder an die entsprechenden Mantelflächenkanäle oder Bodenkanäle gepresst und verschließen diese.

In einer Ausführungsform der vorliegenden Erfindung sind die Schließzylinder zumindest teilweise hydrophob. Besonders bevorzugt sind die Oberflächen der Schließzylinder hydrophob, wenn das Trägerfluid hydrophob ist. Ist das Trägerfluid hingegen hydrophil, sind die Oberflächen der Schießzylinder bevorzugt ebenfalls hydrophil. In einer Ausführungsform bestehen die Schließzylinder aus einem Material, das gute dichtende Eigenschaften aufweist, beispielsweise aus PTFE. In einer weiteren Ausführungsform sind die Oberflächen der Schließzylinder hydrophobisiert oder hydrophilisiert, je nach Art des verwendeten Trägerfluids.

In einer weiteren Ausführungsform sind die kugelförmigen Enden der Schließzylinder mit einem schalenförmigen Radius entsprechend dem Druckmesser des Hohlzylinders des Anschlussstators ausgestattet. Eine zusätzliche Ausführungsform weist ein offenes Dichtband auf, um die Mantelflächenkanäle oder Bodenkanäle zu verschließen.

In einer Ausführungsform der vorliegenden Erfindung befinden sich in den Mantelflächenkanälen oder Bodenkanälen Schläuche aus PTFE, um das Fluid aus dem Umlenkmodul zu- oder abzuführen. Erfolgt das Verschließen der Mantelflächenkanäle oder Bodenkanälen mit den PTFE Schläuchen durch Schließzylinder in Form von einseitig abgerundeten Schließzylindern mittels vorgespannter Druckfedern, wird der PTFE Schlauch durch das Anpressen des Schließzylinders verschlossen. Da PTFE Schläuche eine gewisse Flexibilität bzw. Verformbarkeit aufweisen, wird hierdurch das Verschließen des Schlauches noch zusätzlich unterstützt.

Weiterhin weist das Umlenkmodul eine Schaltachse mit einer Achsenkupplung auf, wobei die Achsenkupplung die Schaltachse mit dem Schaltrotor verbindet, so dass eine Kraftübertragung von der Schaltachse auf den Schaltrotor ermöglicht wird. Diese dient der Übertragung einer Drehbewegung beispielsweise von einem Schrittmotor auf den Schaltrotor. Die Achsenkupplung der Schaltwelle zum Schaltrotor wird hierbei in einer bevorzugten Ausführungsform mit einem Kopplungsstift verbunden. Die Schaltachse ragt durch den optionalen Radial-Wellendichtringdeckel und den Statordeckel in eine Aufnahme im Schaltrotor und wird dort über einen Kopplungsstift mit dem Schaltrotor verbunden. Auf diese Weise ist eine Übertragung der Antriebskraft vom Schrittmotor auf den Schaltrotor gewährleistet. Die Aufnahme ist bevorzugt im Mittelpunkt des Schaltrotors in einer Linie mit dem Grundflächenkanal im Anschlussstator angeordnet. Auf diese Weise ist eine sehr exakte Ausrichtung des Schaltrotors zu den Mantelflächenkanälen oder Bodenkanälen möglich. Die Ausrichtung wird dabei vorteilhafterweise elektrisch gesteuert. Eine Abdichtung der Drehbewegung der Welle zum Statordeckel erfolgt beispielsweise mittels eines Radial-Wellendichtrings.

Durch die Drehbewegung des Schaltrotors kann ausgewählt werden, welcher Mantelflächenkanal oder Bodenkanal des Anschlussstators mit dem Transportkanal des Schaltrotors in Verbindung steht. Durch die zentrale Anordnung des Grundflächenkanals ist dieser unabhängig von einer Drehbewegung des Schaltrotors jederzeit mit dem Transportkanal verbunden. Durch Drehen des Schaltrotors kann nun ausgewählt werden, zu welchem Mantelflächenkanal oder Bodenkanal ein einströmendes Fluid geleitet werden soll, wobei alle weiteren Mantelflächenkanäle oder Bodenkanäle durch die n-1 Schließzylinder verschlossen werden.

Selbstverständlich kann das Umlenkmodul auch derart genutzt werden, dass ein Fluid oder eine Tropfensequenz über einen beliebigen Mantelflächenkanal oder Bodenkanal durch den Transportkanal zum Grundflächenkanal geleitet wird. Die Funktionsweise und der Aufbau des Umlenkmoduls bleiben hierdurch unverändert.

Der Schaltrotor der vorliegenden Erfindung weist in einer bevorzugten Ausführungsform ein Material auf, enthalten in der Gruppe aufweisend Polyetheretherketon (PEEK), Polytetrafluorethylen (PTFE) und Kombinationen dieser. Diese Materialien weisen vorteilhafterweise eine geringe Haftreibung und eine hohe Temperaturfestigkeit auf.

In einer Ausführungsform der vorliegenden Erfindung ist die Oberfläche des Transportkanals des Schaltrotors zumindest teilweise hydrophob oder hydrophil. Eine hydrophobe Oberfläche des Transportkanals ist insbesondere erwünscht, wenn wässrige Tropfen in einem öligen Transportfluid durch das Umlenkmodul transportiert werden sollen. Eine hydrophile Oberfläche des Transportkanals ist hingegen vorteilhaft, wenn ölige Tropfen in einem wässrigen Transportfluid durch das Umlenkmodul geleitet werden. Eine hydrophobe Oberfläche des Transportkanals kann insbesondere dadurch erreicht werden, indem der gesamte Schaltrotor aus einem hydrophoben Material, beispielsweise aus PTFE besteht. In einer weiteren Ausführungsform kann der Transportkanal aber auch ganz oder teilweise hydrophobisiert werden.

In einer weiteren Ausführungsform der vorliegenden Erfindung wird in den Transportkanal ein Schlauch eingelegt. Der Schlauch besteht vorzugsweise aus einem hydrophoben Material, wie beispielsweise PTFE, wenn das Trägerfluid hydrophob ist. In diesem Fall muss der Durchmesser des Transportkanals entsprechend so gewählt werden, dass trotz des innenliegenden Schlauches keine Unstetigkeiten und/oder ein Versatz zwischen den Mantelflächenkanälen oder Bodenkanälen und dem Transportkanal oder dem Grundflächenkanal und dem Transportkanal entstehen.

Wenn wässrige Tropfen in öligen Trägerfluiden transportiert werden, weisen in einer bevorzugten Ausführungsform der vorliegenden Erfindung alle fluidführenden Elemente des Umlenkmoduls PTFE auf oder bestehen aus PTFE. In dieser Ausführungsform wird gewährleistet, dass alle Oberflächen mit denen ein Fluid, dass das Umlenkmodul passiert in Kontakt kommt, hydrophobe Eigenschaften aufweisen.

In einer weiteren Ausführungsform der vorliegenden Erfindung besteht der Schlauch bevorzugt aus einem hydrophilen Material. In dieser Ausführungsform wird gewährleistet, dass alle Oberflächen, mit denen ein Fluid, dass das Umlenkmodul passiert, in Kontakt kommt, hydrophile Eigenschaften aufweisen. Dies ist besonders vorteilhaft, wenn ölige Tropfen in einem wässrigen Trägerfluid transportiert werden. Auch in dieser Ausführungsform muss der Durchmesser des Transportkanals entsprechend so gewählt werden, dass trotz des innenliegenden Schlauches keine Unstetigkeiten und/oder ein Versatz zwischen den Mantelflächenkanälen oder Bodenkanälen und dem Transportkanal oder dem Grundflächenkanal und dem Transportkanal entstehen.

In einer weiteren Ausführungsform der vorliegenden Erfindung sind Schläuche in alle fluidführenden Elemente des Umlenkmoduls eingelegt.

Weiterhin bevorzugt ist es, wenn die mit dem Schaltrotor in Berührung stehenden Elemente des Umlenkmoduls Oberflächen mit einer möglichst geringen Rauheit aufweisen, um den Reibungswiderstand bei der Drehung des Schaltrotors zu minimieren.

In einer Ausführungsform weist das Umlenkmodul weiterhin einen Kopplungsring auf. Dieser umgibt den Anschlussstator und wird mit den Montageschrauben fixiert, die den Anschlussstator und den Statordeckel mit dem Antrieb (Schrittmotor) verbinden.

In einer Ausführungsform der vorliegenden Erfindung weist das Umlenkmodul weiterhin zwei Entlüftungsanschlüsse auf, wobei durch einen ersten Entlüftungsanschluss (in der Grundfläche des Anschlussstators, versetzt zum Grundflächenkanal integriert) die ölige Phase in das Modul eingeleitet wird, die als Trägerfluid zur Tropfengenerierung eingesetzt wird. Durch die Einleitung wird bei der Montage des Umlenkmoduls vorhandene Luft zwischen dem Anschlussstator und dem Schaltrotor verdrängt und durch einen zweiten Entlüftungsanschluss (in der Mantelfläche des Statordeckels integriert) entfernt. Selbiges gilt auch für das Einleiten einer wässrigen Phase in das Modul.

In einer weiteren Ausführungsform der Erfindung weist das Umlenkmodul weiterhin eine Nullpunkt Justierschraube auf. Diese durchragt den Anschlussstator und steht im Kontakt mit dem Schaltrotor, wodurch die Position des Schaltrotors im Anschlussstator durch den Einsatz der Nullpunkt Justierschraube in der Startposition justiert werden kann.

In einer Ausführungsform der vorliegenden Erfindung besteht das gesamte Umlenkmodul aus Materialien, die sterilisierbar bzw. autoklavierbar sind. Damit kann das Umlenkmodul in Bereichen eingesetzt werden, in denen unter sterilen Bedingungen gearbeitet werden muss. Die modulare Bauweise des Umlenkmoduls ermöglicht eine einfache Reinigung aller Elemente des Umlenkmoduls, wodurch das Handling stark vereinfacht wird.

Das erfindungsgemäße Umlenkmodul kann insbesondere im Bereich der tropfenbasierten Mikrofluidik angewendet werden. Beispielsweise können mit dem Umlenkmodul Tropfensequenzen z.B. auf andere Schlauchabschnitte oder in ein Speichermodul umgelenkt werden. Grundsätzlich können mit dem Umlenkmodul je nach Zielstellung Tropfensequenzen von einem Grundflächenkanal auf mehrere Mantelflächenkanäle oder Bodenkanäle verteilt bzw. umgelenkt werden. Der umgekehrte Weg ist ebenfalls möglich, in diesem Fall fungieren die Mantelflächenkanäle oder Bodenkanäle als Eingänge für ein Fluid oder einer Tropfensequenz und das Fluid oder die Tropfensequenz wird durch den Grundflächenkanal umgelenkt, welcher dann als Ausgangskanal fungiert.

Durch das erfindungsgemäße Umlenkmodul ist eine zuverlässige und störungsfreie Verteilung bzw. Umlenkung von Tropfensequenzen möglich, wobei die ungenutzten Mantelflächenkanäle oder Bodenkanäle vollständig vom Transportkanal entkoppelt sind.

Für die Montage des erfindungsgemäßen Umlenkmoduls (Einsatz der Schließzylinder mit den Federn und des bestückten Schaltrotors in den Anschlussstator) und für das Schneiden der Anschlussschläuche und des Transportschlauches (identische Schneidradien wie der Schaltrotor) werden spezielle Montage- und Schneidwerkzeuge eingesetzt.

Weiterhin kann das Umlenkmodul mit optischen, magnetischen und elektroimpedimetrischen Sensoren ausgestattet werden, um die genaue Ausrichtung des Transportkanals des Schaltrotors zu den entsprechenden Mantelkanälen oder Bodenkanälen des Anschlussstators zu erfassen und gegebenenfalls zu regeln. Zudem können gleiche Sensoren eingesetzt werden, um die Position von Fluidkompartimenten im Transportkanal des Schaltrotors oder in den Mantelflächenkanälen oder Bodenkanälen des Anschlussstators zu erfassen.

## Anordnung zum Generieren von Fluidsequenzen

Ein weiterer Aspekt der Erfindung betrifft eine Anordnung zum Generieren von Fluidsequenzen die modular aufgebaut ist und die erfindungsgemäße Einrichtung zur Kopplung verschiedener Systemabschnitte unterschiedlicher Funktion in der Anordnung, die vorzugsweise eine Mikrofluidikanordnung ist, enthält. Besonders bevorzugt ist die erfindungsgemäße Einrichtung zur Kopplung verschiedener Systemabschnitte unterschiedlicher Funktion in einer Anordnung für die tropfenbasierte Mikrofluidik enthalten. Seit zwei Jahrzehnten gilt die tropfenbasierte Mikrofluidik als Alternative zu wellbasierten Verfahren, die sich für unterschiedlichste Anwendungen in den Lebenswissenschaften oder für chemische Applikationen umfassend etabliert haben. Trotz des bisher nicht erfolgten Durchbruchs der tropfenbasierten Mikrofluidik besitzt diese unbestrittene Vorteile, die es für eine Reihe singulärer Applikationen zu nutzen gilt. Dies betrifft neben der Durchführung katalytischer Reaktionen im Mikromaßstab insbesondere Applikationen im Bereich der Mikrobiologie, der Zellbiologie, der Biomedizin, Pharmazie und der personalisierten Medizin. Die hier eingereichte Erfindung betrifft Vorrichtungen, Anordnungen und Verfahren auf der Basis der tropfenbasierten Mikrofluidik für eben diese Applikationsfelder.

Etablierte Verfahren nutzen Mikrotiterplatten, bei denen die einzelnen Wells (6 Wells bis 3456 Wells) als voneinander separierte Reaktions- bzw. Kultivierungsräume genutzt werden. Die parallele Anordnung der Wells bietet Vorteile, wie beispielsweise den einseitigen freien Zugang zum Reaktions- bzw. Kulturmedium in den Wells. Dieser freie Zugang ist gleichzeitig aber die Ursache für Verdunstung des in den Wells befindlichen Mediums, was im Allgemeinen nachteilig für den jeweiligen Prozess ist. Aufgrund eines hohen Parallelisierungsgrades liegt das Arbeitsvolumen eines Wells einer 3456er Mikrotiterplatte mit ca. 1-5 μL in einem Bereich, in dem die Verdunstung nicht zu vernachlässigen ist bzw. so dominant ist, dass Prozesse (z.B. für Zellkultivierungen) über längere Zeiträume unmöglich sind. Im Fall von biologischen Proben vergrößert der freie Zugang zu den Wells zusätzlich die Kontaminationsgefahr. Der Vorteil der freien Zugänglichkeit begünstigt die Automatisierbarkeit mit Hilfe von Pipettierrobotern, allerdings ist der technische und der verfahrenstechnische Aufwand hierfür sehr hoch.

Folgende technische Probleme werden durch die vorliegende Erfindung gelöst:

- Minimierung der Probenmenge (relevant z.B. bei Patientenproben) auf unter 1 μl,
- Verringerung des technischen Aufwandes (Ersatz von Pipettierrobotern, Verringerung des technischen Aufwandes für die Probenkonditionierung und das Probenhandling),
- Erhöhung der prozesstechnischen Flexibilität durch benutzerfreundliche Bedienung und hohen Automatisierungsgrad,
- Vermeidung von Verdunstungseffekten und
- Vermeidung von Kontaminationsgefahren (aktive, passive Sicherheit).

Bei konventionellen Verfahren auf der Basis von Mikrotiterplatten werden zur Vermeidung von Kontaminationen und Verdunstungseffekten Sicherheitsvorkehrungen zum sicheren Verschließen der Wells getroffen. Dies kann manuell oder automatisiert erfolgen. Verdunstungssicheres Verschließen der Wells verursacht keinen oder ungenügenden Gasaustausch und ungenügenden Zugang für Fluidmanipulationen in den Wells. Eine Automatisierung zum Entfernen des Verschlusses und zum erneuten Verschließen ist aufwändig. Vollständige Automatisierung für aufwändige und langwierige Prozesse wie *in vitro*-Untersuchungen von Zellen und 3D-Zellstrukturen in Mikrotiterplatten ist sehr kosten- und materialintensiv. Diese Nachteile werden durch die erfindungsgemäße modulare Anordnung und das erfindungsgemäße Verfahren auf der Basis der tropfenbasierten Mikrofluidik eliminiert.

Die tropfenbasierte Mikrofluidik basiert darauf, dass die in einem Schlauch befindlichen Fluidkompartimente als Reaktionsräume definiert werden, auf die alle mit Mikrotiterplatten möglichen Funktionen übertragen werden und die als einzelne Kompartimente beliebig manipuliert und analysiert werden können. Dafür werden erfindungsgemäße Aktoren und Sensoren verwendet, die nahezu beliebig angeordnet und verfahrenstechnisch angesteuert werden können.

Die Erfindung kann als kompaktes Gerät ausgeführt werden; einschließlich solcher Funktionen wie Inkubation der Fluidkompartimente. Die Manipulation der Kompartimente findet in Mikro- bzw. Mesokanälen (z.B. PTFE-Schläuchen) statt und benötigt keine technisch aufwändigen Pipettierroboter (x-y-z-Manipulatoren). Zudem besteht keine Verdunstungs- und Kontaminationsgefahr, wodurch Applikationen mit der erfindungsgemäßen Anordnung auch in Laboren mit geringen Sicherheitsstufen durchgeführt werden können.

Die Anwendungsmöglichkeiten der erfindungsgemäßen Anordnung sind vielfältig. Anwendungsgebiete sind beispielsweise die Lebenswissenschaften, chemische und pharmazeutische Industrie und die Medizintechnik (Beispiele: Tumorscreening für die personalisierte Medizin, Wirkstoffscreening (Chemotherapeutika, Antibiotika, Virostatika usw.) für Forschung und Pharmaindustrie, Partikelsynthese als Basis für bildgebende Verfahren in der medizinischen Diagnostik usw.).

Die erfindungsgemäße Anordnung enthält funktionelle Module zum Generieren, Konditionieren, Manipulieren und Analysieren von Fluidkompartimenten mehrphasiger Fluide in mikro-/mesofluidischen Kanälen. Die einzelnen Module realisieren die Funktionen

i) Tropfengenerierung,
ii) Zugabe von Fluid in die Tropfen oder in das Trägerfluid,
iii) Entnahme von Fluid aus den Tropfen oder aus dem Trägerfluid,
iv) Sortieren von Tropfen (Ausschleusen einzelner Tropfen oder Teilen einer Tropfensequenz aus einer Gesamttropfensequenz oder Einbringen einzelner Tropfen oder Teilen einer Tropfensequenz in eine Gesamttropfensequenz oder Umlenken einer oder mehrerer Gesamttropfensequenzen oder Umlenken von einphasigen Fluiden),
v) Detektion der Tropfengröße und der Tropfenabstände,
vi) Detektion der Tropfeninhalte und der Inhalte des Trägerfluids,
vii) Detektion der Phasengrenzen.

Alle Aktoren und Sensoren werden über entsprechende Schnittstellen mittels einer Steuereinrichtung angesteuert bzw. ausgelesen. Die Regelung der Aktoren und Sensoren erfolgt in Abhängigkeit der Protokolle für die jeweilige Applikation und ist vom Anwender frei programmierbar. Die Steuereinrichtung wird im Folgenden auch als Steuermodul bezeichnet.

In einer bevorzugten Ausführungsform enthält die erfindungsgemäße Anordnung das hierin beschriebene erfindungsgemäße Umlenkmodul sowie ein oder mehrere Module, die ausgewählt sind aus

- Flussquelle,
- Mischmodul,
- Tropfenmodul,
- Gradientenmodul,
- Speichermodul,
- Druckmodul,
- Zudosiermodul / Konditioniermodul,
- Mikroskopiemodul,
- Analysemodul,
- Vereinigungsmodul
- Abscheidemodul, und
- Flusssenke.

Die erfindungsgemäße Anordnung kann eine oder mehrere, vorzugsweise 1 bis 10 Flussquellen enthalten. Als Flussquellen kommen alle Pumpen, Vorrichtungen zum Erzeugen von Überdruck oder ähnliches in Frage, die für die Anwendung in der Mikrofluidik, insbesondere der tropfenbasierten Mikrofluidik, geeignet sind. Es kann auch ein Pumpenmodul eingesetzt werden, das ein oder mehrere Flussquellen, vorzugsweise 1 bis 10 Flussquellen in Form einzelner Pumpen oder einzeln ansteuerbarer Druckkanäle, und entsprechende Vorlagenreservoirs enthält. Ein geeignetes Pumpenmodul ist beispielsweise das modulare neMESYS Spritzenpumpensystem der cetoni GmbH, das als integraler Bestandteil der modularen Anordnung gemäß der Erfindung alle fluidischen Operationen realisiert und eine gleichmäßige und pulsationsfreie Förderung kleinster Fluidmengen ermöglicht. Dieses Spritzenpumpensystem ist als Niederdrucksystem für die Förderung von Fluiden mit einem Druck von maximal 6 bar ausgelegt. Jeder Kanal des Systems kann über die entsprechende Steuerungssoftware (z.B. QmixElements) einzeln gesteuert werden. Weitere Flussquellen können pulsationsarme Schlauchpumpen sein, Zahnringpumpen oder aber Systeme auf der Basis von Überdruck, der einen Fluidtransport initiiert.

Beispielsweise können damit jeweils zwei Kanäle zur Förderung der kontinuierlichen Phase (z.B. Perfluordekalin) und zur Förderung von Tetradekan (TD) dienen. Damit stehen wenigstens drei Kanäle zur Förderung weiterer Fluide zur Verfügung. Jeder Spritzenpumpenkanal ist mit einem 3/2-Wegeventil ausgestattet.

Das Mischmodul dient dem Dispergieren von beispielsweise zellhaltigen Suspensionen vor deren Einleitung in das Mikrofluidik-System. Die Durchmischung der Suspensionen kann beispielsweise durch ein Rührelement (z.B. einen Blattrührer) realisiert werden. Die Rotation des Blattrührers wird durch einen Motor, vorzugsweise einen Gleichstrommotor ermöglicht. Die Drehzahl und die Drehrichtung des Rührelements ist mit Hilfe einer Steuereinrichtung steuerbar. In einer bevorzugten Ausführungsform ist die Drehzahl des Rührelements im Bereich von 30 UpM bis 300 UpM einstellbar. Das Mischmodul kann über ein Deckel- und ein Bodenelement verfügen. Durch die Verbindung der beiden Elemente wird ein Reservoir gebildet, das typischerweise mit einer Kapazität von mehreren Millilitern, z.B. von 2,5 - 100ml, bevorzugt von 5-100 ml gebildet wird. Hierzu weisen Deckel- und ein Bodenelement entsprechende Kavitäten auf. Das Deckelelement weist vorzugsweise einen Einlass zur Befüllung des Reservoirs mit den gewünschten Medien auf. Außerdem kann das Mischmodul einen Auslass enthalten, der für die Entlüftung des Moduls genutzt wird. Das Probenmedium wird vorzugsweise über einen Auslass im Bodenelement in das Mikrofluidik-System eingeleitet.

Das Mischmodul wird zum Dispergieren der Proben vor der Einleitung in das Mikrofluidik-System eingesetzt. Es wurde speziell für Anwendungen mit heterogenen Medien entwickelt, die z.B. Zellen oder andere sedimentierende Bestandteile (Partikel) enthalten. Das Mischmodul weist vorzugsweise einen weiteren Eingang im Deckelelement auf. Durch diesen weiteren Eingang kann eine hydrophobe Flüssigkeit, wie z.B. ein Öl, mit einer Pumpe in das Mischmodul gefördert werden. Ein hierfür geeignetes Öl ist beispielsweise Tetradekan mit einer Dichte von 0,7628 g/cm$^3$. Durch den hydrophoben Charakter und die niedrige Dichte schwimmt die hydrophobe Flüssigkeit im Mischmodul auf der wässrigen Probenphase. Durch die Einleitung der hydrophoben Flüssigkeit in das Mischmodul wird die Probenphase mit dem Volumenstrom der Einleitung der hydrophoben Flüssigkeit über den Auslass in das Mikrofluidik-System verdrängt.

Das Tropfenmodul dient der Erzeugung und Manipulation von Kompartimenten. Es weist mindestens zwei Fluidleiter zum Führen voneinander getrennter Fluidpfade auf, wobei die mindestens zwei Fluidleiter ineinander geschachtelt angeordnet sind. Vorzugsweise ist ein Ende eines ersten Fluidleiters mit einer steuerbaren Flussquelle für die Aufprägung eines Flusses eines Transportfluids verbunden. Ein Ende eines zweiten Fluidleiters ist vorzugsweise mit einer weiteren steuerbaren Flussquelle für die Aufprägung eines Flusses eines Kompartiments verbunden. Auf der Grundlage des Tropfenmoduls ist das Erzeugen von Kompartimenten mit eingeschlossenem organischen und/oder anorganischen Material sowie mittels beliebiger Verbindungen erzeugter Komplexe bestehend aus organischen und anorganischen sowie mittels beliebiger Verbindungen erzeugter Komplexe bestehend aus nur anorganischen oder nur organischen Material auf besonders schonende Art und Weise möglich. Die Entnahme von Proben aus einem Probenfluid, das organisches Material wie beispielsweise eukaryotische Zellen (unerheblich ob adhärent auf einem Mikrocarrier oder in Suspension), Zellgewebe, Sphäroide, Einzeller, Mehrzeller, Pilze, Viren, Bakteriophagen, Mikroorganismen, Organellen etc. beinhaltet, erfolgt ohne mechanischen Stress. Damit ist die Überlebensfähigkeit des organischen Materials während des Kompartimentierens und im Anschluss daran sehr hoch. Ebenso vermeidet die schonende Art und Weise des Kompartimentierens das durch mechanischen Stress hervorgerufene Trennen der Verbindungen zwischen Komplexkomponenten. Das Kompartimentieren erfolgt quasi totvolumenfrei. Das Kompartiment kann anschließend, in das Transportfluid eingebettet, auch über lange Transportwege zur Detektion, beispielsweise in kommerziellen Analysatoren, geleitet werden. Geeignete Tropfenmodule sind beispielsweise in der EP 2 156 890 A2 (sogenannte Zweifluidsonde) und in DE 10 2009 020 449.0 (Chip-basiert) beschrieben. Das Chip-basierte Tropfenmodul kann im Weiteren auch zur der Erhöhung oder Verringerung der Tropfenabstände eingesetzt werden. Hierfür wird eine zuvor generierte Tropfensequenz in den Hauptkanal eines Tropfenmoduls eingeleitet und über die Seitenkanäle das Trägerfluid zur Erhöhung oder zur Verringerung der Tropfenabstände zu- oder abgeführt.

Das Gradientenmodul dient beispielsweise der Erzeugung von Tropfen mit unterschiedlichen Medienzusammensetzungen und Zellkonzentrationen. Das Modul verfügt über mehrere, beispielsweise fünf Eingangskanäle mit einem typischen Innendurchmesser von 100 bis 500 μm (in Summe max. der Innendurchmesser des Hauptkanals) und einen Ausgangskanal (Hauptkanal) mit einem typischen Innendurchmesser von 750 bis 3200 μm. Die Einleitung verschiedener Medien und Zellsuspensionen zur Erzeugung eines Gradienten kann beispielsweise über 1 bis 3 der Eingangskanäle erfolgen. Die beiden anderen Kanäle (4 und 5) sind der Einleitung eines Trägerfluids, d.h. eines mit dem Zellkulturmedium nicht mischbaren Trägerfluids vorbehalten. Ein geeignetes Trägerfluid ist beispielsweise Perfluordekalin. Zum Beispiel wird zur Erzeugung von Tropfen mit einem Zellgradienten in einen Eingangskanal eine Zellsuspension mit einer definierten Konzentration eingeleitet. Zur Erzeugung eines Gradienten wird über die beiden weiteren Eingangskanäle pures Medium eingeleitet. In Abhängigkeit von den Volumenströmen der drei Medien strömen die entsprechenden Volumina in den Hauptkanal. Die Einleitung eines Trägerfluids in die Eingangskanäle 4 und 5 führt im Bereich der Einmündung der beiden Kanäle in den Hauptkanal zur Tropfenbildung.

Die vorliegende Erfindung basiert auf bereits vorhandenen Technologien und stellt eine signifikante Erweiterung dieser dar. Bereits vorhandene singuläre modulare Lösungen (z.B. EP 2156890) werden in ein Gesamtkonzept integriert, was flexibel an die jeweilige Applikation angepasst wird. Den Modulen liegen physikalische Prinzipien der technischen Optik, der Oberflächenwissenschaften und der Mikrofluidik zugrunde, die entsprechend der jeweiligen Applikation miteinander verknüpft und angepasst werden können (z.B. werden für chemische Reaktionen statt oberflächenmodifizierten Polykarbonatchips chemisch und temperaturunempfindliche PTFE-Chips verwendet). Die Module können von einer übergeordneten Steuerungssoftware angesprochen bzw. ausgelesen werden. Aufgrund der seriellen Anordnung der Kompartimente in den Mikrokanälen können diese problemlos in einen Konditionierungsraum (Inkubator) transportiert werden und können so über längere Zeiträume konditioniert werden. Der Inkubator befindet sich ebenso wie die funktionellen Module in einem kompakten und einfach zu transportierenden Gehäuse, welches einschließlich aller technischen Module ein neuartiges "Lab in a Box" repräsentiert.

Die erfindungsgemäße Anordnung kann ein oder mehrere Speichermodule enthalten. Die Speichermodule sind vorzugsweise als Schlauchdisks ausgeführt und werden zur Kultivierung der in den Tropfen befindlichen Zellen im Inkubator gelagert und/oder dienen zur zwischenzeitlichen Ablage der Tropfensequenzen während der Arbeiten mit der fluidischen Plattform. In einer bevorzugten Ausführungsform ist der zur Tropfenspeicherung eingesetzte PTFE-Schlauch des Speichermoduls auf eine aus Polyetheretherketon bestehende Halterung (Disk) aufgewickelt und an dieser fixiert. Die Führung des Schlauches über den Durchmesser der Disk erfolgt mit kreisförmigen Sternstrukturen, die an der Halterung befestigt sind. Beispielsweise kann ein drei Meter langer Schlauch verwendet werden. Je nach Anwendung (Strömungsparameter) können die so konfigurierten Module bis zu 400 Tropfen aufnehmen.

Für die Zudosierung von Wirkstoffen oder allgemein von Reagenzien mit dem Zudosiermodul ist es für die Kontrolle des Zudosiervolumens erforderlich, den Druck im fluidischen System (Systemdruck) zu erfassen. Hierfür kann in der erfindungsgemäßen Anordnung ein Druckmodul enthalten sein, welches vorzugsweise an die Spezifikationen tropfenbasierter Anwendungen angepasst ist. Die Druckmessung erfolgt vorzugsweise mit einem Druckmessumformer. Der Druckmessumformer kann bei tropfenbasierten mikrofluidischen Verfahren nicht direkt in das Kanalsystem integriert werden. An der Membranfläche würden die strömenden Tropfen adhärieren. Hierfür weist das Druckmodul einen entsprechenden Anschlussadapter auf, der den Druckmessumformer vom Mikrokanal geometrisch, aber nicht fluidisch trennt.

Aufgabe des Zudosiermoduls / Konditioniermoduls ist die aktive, reproduzierbare und automatisierte Zugabe von Reagenzien in die durch das Modul strömenden Tropfen. Es dient zum Beispiel der automatisierten Medienzugabe und -entnahme in strömende Tropfen, der Injektion von Gasblasen, insbesondere Luftblasen und der Erhöhung oder Verringerung der Tropfenabstände. Es gibt Zudosiermodule, die mit Magnet- oder Piezoventilen bestückt werden. Zudem gibt es Ausführungen die mit einem oder mehreren Ventilen ausgestattet werden.

Das Mikroskopiemodul dient der bildgebenden (mikroskopischen) Analyse von Zellen die in Tropfen vorliegen. Es sind mehrere Varianten verfügbar, die angepasst sind für verschiedene Anwendungen, z.B. zur Verwendung in unterschiedlichen Mikroskopen und Imaging-Systemen. Geeignete Mikroskopiemodule sind beispielsweise aus der WO 2020/025679 bekannt.

Das Analysemodul ermöglicht eine nicht-invasive Analyse strömender Tropfen und auch des Trägerfluids bzw. der Phasengrenze zwischen dem Kompartiment und dem Trägerfluid. Das Modul kann mit unterschiedlichen Lichtquellen (Lasern, Laserdioden, Lichtleiter gekoppelten Lichtquellen (Halogen, Deuterium, Xenon, IR, etc.) und unterschiedlichen Detektoren, wie optischen (Spektrometer, "photomultiplier tube" (PMT), etc.) und/oder elektrischen und/oder viskoelastischen Detektoren bestückt werden.

Nicht invasive Detektionsmethoden sind insbesondere für die tropfenbasierte Mikrofluidik vorteilhaft, da die entsprechenden Detektoren nicht direkt in das fluidische System eingreifen. Interaktionen des Detektors mit den Medien werden ausgeschlossen. Hierdurch können aseptische Bedingungen und eine störungsfreie Tropfenströmung gewährleistet werden. Vor allem optische Analysemethoden bieten diese Voraussetzungen und erfordern lediglich eine optische Transparenz der tropfenführenden Komponenten. Diese Transparenz bieten sowohl die Materialen PC (Polycarbonat) und COC (Cycloolefin-Copolymer), aus denen die Mikrofluidiksysteme vorzugsweise bestehen, wie auch die zum Teil eingesetzten Schläuche aus FEP (Fluorethylenpropylen). Für eine einfache Erfassung von Tropfen zum Steuern von Komponenten eines mikrofluidischen Systems ist oftmals auch die Transparenz von PTFE-Schläuchen ausreichend.

Die erfindungsgemäße modulare Mikrofluidikanordnung kann ein oder mehrere Analysemodule enthalten.

In einer bevorzugten Ausführungsform ist das Analysemodul ein Spektroskopiemodul. Ein Spektroskopiemodul ist zur Erfassung von Reaktionen innerhalb der Tropfen geeignet, die spektroskopisch erfassbar sind. Spektroskopische Analyseverfahren eignen sich für Absorptions-, Transmissions-, Lumineszenz- und Ramanmessungen, die insbesondere für die Analyse biologischer Prozesse eingesetzt werden. Zudem ermöglichen Spektrometer eine Analyse der Proben über einen breiten Wellenlängenbereich.

In einer bevorzugte Ausführungsform weist das Spektroskopiemodul folgende Konfiguration auf: Es wird für Fluoreszenzmessung verwendet. Als Lichtquelle für die Fluoreszenzanalyse wird eine 100 W Xenonlichtquelle (ILP-1, Olympus GmbH) eingesetzt. Das emittierte Weißlicht wird mit einem Flüssigkeitslichtleiter (Olympus GmbH) zu einem Kopplungsmodul geleitet, an dem ein weiterer Lichtleiter (F1000-UVVis-SR-1, StellarNet Inc.) in diametraler Richtung zum ersten Lichtleiter montiert ist. Die Anbindung des zweiten Lichtleiters an das Kopplungsmodul erfolgt über eine SMA-Kollimationsoptik (STE-LENS-QCOL, StellarNet Inc.), die des ersten über eine Anschlussbohrung, welche an die äußeren Dimensionen der Flüssigkeitslichtleiter angepasst ist. Über das Kopplungsmodul wird ein Bandpassfilter (beispielsweise SEM-FF01-554/23-12.7-D, 554 nm±23 nm, Semrock Inc.) zwischen den Lichtleitern positioniert. Die Ankopplung des zweiten Lichtleiters an das Fluidmikrosystem des Spektroskopiemoduls erfolgt über eine Bohrung, die wiederum an die äußere Struktur des zweiten Lichtleiters angepasst ist. Die Befestigung dieses Lichtleiters erfolgt mit einem Montageschieber, der in das Fluidmikrosystem des Spektroskopiemoduls eingesetzt wird. Nach der Montage des Lichtleiters an das mikrofluidische Modul ist dieser im 90° Winkel zum FEP-Schlauch ausgerichtet und endet direkt am Schlauch. Zur Auskopplung des von der Probe emittierten Lichtes wird ebenfalls eine SMA-Kollimationsoptik (STE-LENS-QCOL, StellarNet Inc.)

eingesetzt. Zur Anbindung der Optik ist ein Anschlussadapter am Spektroskopiemodul vorhanden. Die Messung der Fluoreszenz erfolgt mit einem UV/VIS Spektrometer (SILVER-Nova, 190-1110 nm, StellarNet Inc.). Das Spektrometer ist mit der Steuereinrichtung der erfindungsgemäßen modularen Anordnung verbunden. Die Kopplung des Lichtleiters mit dem Spektrometer erfolgt beispielsweise mittels einer SMA (Sub-Miniature-A)-Verschraubung. Zudem können Parabolspiegel und Sammellinsen in das Analysemodul integriert werden, um eine hohe Lichtsignalaufnahme zu erreichen. Für die Analyse des Fluoreszenzsignals wird hier beispielsweise die spektrometerspezifische Software SpectraWiz (StellarNet Inc.) eingesetzt. Die Software ermöglicht die Visualisierung der gemessenen Spektren in Echtzeit und die Kalibrierung des Spektrometers. Zudem dient die Software zur Einstellung aller für die Messung relevanten Parameter, wie der Messmethode, der Detektor-Integrationszeit und der Mittelwert-Funktion. Des Weiteren bietet die SpectraWiz Software eine automatische Speicherfunktion, mit der innerhalb der kürzesten Integrationszeit von 1 ms und bei einer Mittelwertfunktion von 1 alle 70 ms ein Spektrum automatisch gespeichert wird.

In einer bevorzugten Ausführungsform weist das Analysemodul ein Durchflusszytometer auf oder ist mit einem Durchflusszytometer gekoppelt. Der Begriff Durchflusszytometrie beschreibt ein Messverfahren, das in der Biologie und in der Medizin zur Anwendung kommt. Es erlaubt die Analyse von Zellen, die in hoher Geschwindigkeit einzeln an einer elektrischen Spannung oder einem Lichtstrahl vorbeifließen. Je nach Form, Struktur und/oder Färbung der Zellen werden unterschiedliche Effekte erzeugt, aus denen die Eigenschaften der Zelle abgeleitet werden können. Bei einer Form der Durchflusszytometrie werden Fluoreszenzmarkierte Zellen je nach Färbung in unterschiedliche Reagenzgefäße sortiert. Entsprechende Geräte werden als flow sorter (auf Deutsch: Fluss-Sortierer) oder als FACS (= fluorescenceactivated cell sorting) bezeichnet. Darüber hinaus werden bildgebende Flowcytometer in der Zellanalytik eingesetzt. Hierbei werden die einzelnen Zellen auch mittels eines hydrodynamischen Hüllstroms aufgereiht und anschließend von den Einzelzellen jeweils Bilder zur weiteren Analyse erstellt. Geeignete Durchflusszytometer verschiedener Hersteller sind dem Fachmann bekannt. Sie werden hier zur Endpunktanalytik verwendet. Zur Anbindung an die erfindungsgemäße modulare Mikrofluidikanordnung wurde ein spezieller Adapter entwickelt. In einer Ausführungsform kann aber auch ein Adapter, wie dem Fachmann aus dem Stand der Technik bekannt, verwendet werden. Hiermit kann auch eine entsprechende Analyse an beliebiger Stelle des fluidischen Systems erfolgen.

Des Weiteren kann die erfindungsgemäße Anordnung ein Vereinigungsmodul enthalten, das der Vereinigung mehrerer Tropfen für eine Endpunktanalyse dient. Das Vereinigungsmodul weist eine zylindrische Form auf. Im Zentrum der Grundfläche des Moduls (am Boden) ist ein zylindrischer Hohlraum im Modul vorhanden, der ein kegelförmiges Ende aufweist. Von der Kegelspitze führt eine Durchgangsbohrung zur gegenüberliegenden Grundflächenseite (oben) des Moduls. Für den Anschluss eines Schlauches ist die Bohrung nach außen mit einem Gewinde versehen (Sammelkanal). Auf der mittleren Höhe des zylindrischen Hohlraumes sind an der Mantelfläche des Vereinigungsmoduls zwei gegenüberliegende Durchgangsbohrungen vorhanden, die ebenfalls von außen mit Gewinden ausgestattet sind, um Schläuche anzukoppeln (Eingangs- und Ausgangskanal). Der Hohlraum wird von unten mit einem Deckel verschlossen. Für den Betrieb wird der Hohlraum im Inneren des Moduls mit Perfluordekalin befüllt und vorhandene Luft über den Sammelkanal entfernt. Dafür ist in dem Schlauch am Sammelkanal ein Ventil integriert. Ein Mantelkanal des Moduls dient als Eingang, der gegenüberliegende als Ausgang. Der Schlauch am Ausgangskanal ist ebenfalls mit einem Ventil versehen. Für die Vereinigung von Tropfen wird das Ventil im Sammelkanal verschlossen und das Ventil im Ausgangskanal geöffnet. Tropfen, die in den Eingangskanal eingeleitet werden, strömen durch die höhere Dichte des Perfluordekalins von 1,908 g/cm$^3$ im Hohlraum des Moduls nach oben in das kegelförmige Ende und Vereinigen sich. Das Trägerfluid zwischen den Tropfen strömt durch den Ausgangskanal aus dem Hohlraum heraus. Es können maximal so viele Tropfen gesammelt werden, bis das Kegelvolumen des Hohlraumes mit Tropfenmedium gefüllt ist. Zur Entnahme des gesammelten Tropfenmediums wird das Ventil am Ausgangskanal geschlossen und das Ventil am Sammelkanal geöffnet. Durch die Einleitung von Perfluordekalin wird das gesammelte Tropfenmedium aus dem Hohlraum verdrängt und kann einer Endpunktanalyse zugeführt werden.

In einer weiteren Ausführungsform kann die erfindungsgemäße Anordnung ein Abscheidemodul enthalten. Das Abscheidemodul dient der Verringerung der Tropfenabstände und ermöglicht eine nahezu vollständige Entnahme der kontinuierlichen Phase (hier beispielsweise des Perfluordekalins) zwischen einzelnen Tropfen. Das Abscheidemodul ermöglicht somit eine andere Vorgehensweise zur Tropfenvereinigung. Das Abscheidemodul weist einen Hauptkanal auf. In der horizontalen Ebene zum Hauptkanal führen auf beiden Seiten zum Hauptkanal je 10 bis 30 linsenförmige Kanäle (z.B. Länge: 600 $\mu$m, Breite: 170 $\mu$m, Höhe: 50 $\mu$m) in parallel zum Hauptkanal liegende zylindrische Hohlräume. Beide Hohlräume sind mit je einem nach außen führenden Kanal verbunden. Für die Abscheidung von Trägerfluid aus einer Fluidsequenz werden die Linsenkanäle hydrophobisiert und die Hohlräume über die nach außen führenden Kanäle (Saugkanäle) mit einem Unterdruck beaufschlagt. Im Betrieb wird eine Fluidsequenz in den Hauptkanal eingeleitet. Durch die Hydrophobisierung der Kanaloberflächen, insbesondere der Linsenkanäle und deren geringen Querschnitte, wird beim Durchströmen einer Fluidsequenz hauptsächlich das hydrophobe Trägerfluid über die Saugkanäle abgeführt. Dieser Vorgang führt zu einer Vereinigung der Fluidkompartimente.

In einer weiteren Ausführungsform kann die erfindungsgemäße Anordnung ein oder mehrere, vorzugsweise 1 bis 5 Flusssenken enthalten. Im Gegensatz zu Flussquellen entziehen Flusssenken dem System das Fluid oder die Fluide oder die Fluidsequenz. Im Allgemeinen wird dies mit einer saugenden Spritzenpumpe oder einem Unterdruck im Fall druckbasierter Systeme realisiert. Eine Flusssenke kann letztendlich auch dadurch realisiert werden, dass an einem Schlauchende das Fluid in ein Abfallgefäß austritt.

Die einzelnen Module der erfindungsgemäßen Anordnung sind durch Transportkanäle für die Multifluide, so genannte Multifluidtransportkanäle (MFTK) verbunden, die in einzelne Multifluidtransportkanalabschnitte unterteilt sein können. Einzelne Multifluidtransportkanalabschnitte können als Speichermodul ausgeführt sein und nach der Befüllung mit der Fluidsequenz mittels einer Vorrichtung von der erfindungsgemäßen Anordnung getrennt und beispielsweise zum Kultivieren in einem Inkubator gelagert werden.

Die erfindungsgemäße Anordnung kann weiterhin steuerbare Ventile enthalten, die von der Steuereinrichtung derart angesteuert werden, dass in der erfindungsgemäßen Anordnung oder einzelnen Teilabschnitten (Multifluidtransportkanalabschnitten) ein definiertes Fluidvolumen transportiert wird.

Die Steuerung und Regelung der erfindungsgemäßen mikrofluidischen Anordnung erfolgt durch eine Steuereinrichtung, die eine automatisierte Prozessführung ermöglicht und alle Module, Pumpen/Spritzen und Ventile steuern kann. Die Steuereinrichtung ist vorzugsweise ein PC, Laptop-Computer oder Prozessrechner (Mikrocontroller). In einer besonders bevorzugten Ausführungsform ist die Steuereinrichtung eine Kontrolleinheit, die sämtliche elektronischen und pneumatischen Komponenten beinhaltet und eine automatisierte Prozessführung ermöglicht. Die Kontrolleinheit und die sonst noch enthaltenen Module, wie oben beschrieben, bilden dann die tropfenbasierte mikrofluidische Anordnung.

Ein besonderer Vorteil der tropfenbasierten mikrofluidischen Anordnung gemäß der Erfindung ist, dass generell auf die Anwendung oberflächenaktiver Substanzen (Tenside) zur Tropfenstabilisierung verzichtet wird. Dieser Verzicht bringt Vorteile z.B. hinsichtlich der Kosten, da insbesondere die in der tropfenbasierten Mikrofluidik eingesetzten Tenside einen zusätzlichen Kostenfaktor darstellen. Auch ist die Zugabe von Wirkstoffen zu den Tropfen oder der Austausch von Tropfenmedium bei einem Verzicht auf Tenside einfacher realisierbar. Jeglicher Einfluss der Tenside auf den Tropfeninhalt kann grundsätzlich ausgeschlossen werden.

Grundlegende Voraussetzungen bei der Wahl geeigneter Materialen für Bauteile in der Mikrofluidik sind deren biologische und chemische Inertheit, deren Sterilisierbarkeit und Formstabilität. Des Weiteren sind transparente Materialien vorteilhaft. Auch spielen die Materialeigenschaften beim Fügen (Kleben, Bonden und Verschrauben) und in Bezug zur Gewährleistung der Dichtheit eine wichtige Rolle. Vorzugsweise wurden für die erfindungsgemäßen Module Materialien verwendet, die optisch transparent sind, wodurch eine Beobachtung der Prozesse in den Mikrokanälen ermöglicht wird. Weiterhin begünstigt die Transparenz den Einsatz optischer Verfahren zur Detektion der Probentropfen und zur Analyse der in den Tropfen ablaufenden Reaktionen. Besonders bevorzugt hierfür sind die Polymere Polycarbonat und COC. Für die angestrebten Anwendungen weisen diese Polymere eine ausreichend hohe Formstabilität und chemische Inertheit auf.

Soll aufgrund des Verzichts auf Tenside eine störungsfreie Strömung der wässrigen Probentropfen realisiert werden, müssen die Kanaloberflächen und die Verbindungen zu den Schläuchen einen ausreichend hohen Hydrophobisierungsgrad aufweisen. Insbesondere bei Anwendungen mit biologisch relevanten Flüssigkeiten, die zumeist einen hohen Proteingehalt aufweisen (z.B. Zellkulturmedien), müssen die Kanaloberflächen zur Verhinderung einer Adhäsion des Probenmediums hydrophobisiert werden. Nicht nur der Hydrophobisierungsgrad spielt hierbei eine hervorgehobene Rolle, auch muss die Hydrophobisierung über die gesamte Oberfläche der tropfenführenden Kanäle eine gleichmäßige und konsistente Qualität aufweisen. In einer bevorzugten Ausführungsform der Erfindung wurden die entsprechenden Oberflächen mittels Plasmaverfahren beschichtet. In einer besonders bevorzugten Ausführungsform wurden alle Oberflächen mit auf CVD basierenden Plasmaverfahren (PA-CVD, plasmaunterstützte chemische Gasphasenabscheidung zur Abscheidung von Octafluorcyclobutan ($C4F8$)) und / oder mit einer Mikrostrukturierung versehen.

In einer bevorzugten Ausführungsform stellt die Erfindung eine Anordnung zum Generieren von Fluidsequenzen bereit, umfassend Fluidkompartimente (FK), eingebettet in mindestens ein weiteres, mit den Fluidkompartimenten nicht mischbares Fluid (FKN), in mindestens einem Multifluidtransportkanal (MFTK) und / oder zum Konditionieren und / oder Detektieren der in dem Multifluidtransportkanal (MFTK) generierten Fluidsequenzen,

dadurch gekennzeichnet, dass

- die Anordnung mindestens eine steuerbare Flussquelle (FQ) und mindestens einen mit der steuerbaren Flussquelle (FQ) verbundenen Fluidtransportkanal (KQ) und/oder mindestens eine steuerbare Flusssenke (FS) mit mindestens einem verbundenen Fluidtransportkanal (KS) zum Transport von mit den Fluidkompartimenten (FK) mischbaren Fluiden (FKM) und/oder mit den Fluidkompartimenten nicht mischbaren Fluiden (FKN) und mindestens ein Mess- und Steuermodul (MSM) aufweist, wobei die Fluidkompartimente (FK) optional anorganisches Material (MA) wie beispielsweise Polymerpartikel oder Hydrogele und/oder organisches Material (MO) wie beispielsweise Viren oder Zellen enthalten, wobei

◦ ein mit einer steuerbaren Flussquelle (FQ_1) verbundener Fluidtransportkanal (KQ_1),

◦ und mindestens ein weiterer mit einer Flussquelle (FQ_2) verbundener Fluidtransportkanal (KQ_2) und/oder

◦ mindestens ein mit einer Flusssenke (FS_1) verbundener Fluidtransportkanal (KS_1)

in einen Multifluidtransportkanal (MFTK) münden, wobei dem Multifluidtransportkanal (MFTK) zugeordnet sind:

i) mindestens eine Vorrichtung (VA) zum Verbinden des mindestens einen Fluidtransportkanals (KQ) und/oder des mindestens einen Fluidtransportkanals (KS) an den Multifluidtransportkanal (MFTK),

ii) mindestens ein Detektor (D1), verbunden mit mindestens einem Mess- und Steuermodul (MSM), zum Erfassen und Steuern von optischen und/oder viskoelastischen und/oder elektrischen Eigenschaften der im Multifluidtransportkanal (MFTK) befindlichen Fluide (F) und/oder der darin befindlichen anorganischen und/oder organischen Materialien (M) wie auch der Phasengrenzen,

iii) mindestens ein Detektor (D2), verbunden mit mindestens einer Mess- und Steuereinrichtung (MSM), zur Erfassung und Steuerung des Drucks in dem mindestens einen Multifluidtransportkanal (MFTK) und

iv) mindestens eine Vorrichtung (VT) zum Verbinden von zwei Multifluidtransportkanalabschnitten (MFTK_1, MFTK_2) zu mindestens einem Multifluidtransportkanal (MFTK) oder zum Teilendes Multifluidtransportkanals (MFTK) als steuerbares Umlenkmodul (VSS) ausgeführt ist, mit dem ein Multifluidtransportkanalabschnitt (MFTK_X) des Multifluidtransportkanals (MFTK) als Fluidsequenzeingang und ein Multifluidtransportkanalabschnitt (MFTK_Y) des Multifluidtransportkanals (MFTK) als Fluidsequenzausgang verbunden ist und mit dem mindestens ein weiterer Multifluidtransportnebenkanal (MFTNK_1-n) verbunden ist.

Mit dieser Anordnung sind Tropfengenerierung, Mediumaustausch, Mediumzugabe und -abnahme, Teilung des Flusses der Fluide, etc. ausführbar. Flussquellen und -senken können wie oben beschrieben, aber auch Spritzenpumpen oder Druckpumpen sein. Die Vorrichtungen VA und VT können im einfachsten Fall Verbinder mit zwei Schraubfittingen sein. In einer bevorzugten Ausführungsform ist VT das Umlenkmodul (VSS) gemäß der Erfindung. VA kann insbesondere eine doppellumige Sonde (Zweifluidsonde), ein Gradienten-, ein Tropfen-/Konditionier-, ein Vereinigungs- oder Abscheidemodul sein.

Das Umlenkmodul (VSS) ist eine bevorzugte Ausführungsform der oben genannten erfindungsgemäßen Einrichtung zur Kopplung verschiedener Systemabschnitte unterschiedlicher Funktion.

Erfindungsgemäß ist ein erster Detektor (D1) dazu eingerichtet, optische und/oder elektrische und/oder viskoelastische Eigenschaften der im Multifluidtransportkanal MFTK befindlichen Fluide F einschließlich der darin befindlichen anorganischen und/oder organischen Materialien M wie auch deren Phasengrenzen zu erfassen. In einer Ausführungsform kann der erste Detektor (D1) als spektroskopisches, mikroskopisches oder flowcytometrisches Modul ausgeführt sein.

Erfindungsgemäß ist ein weiterer Detektor (D2) dazu eingerichtet, den Druck im Multifluidtransportkanal MFTK zu erfassen. In einer Ausführungsform kann der weitere Detektor (D2) als Druckmodul ausgeführt sein.

In einer weiteren bevorzugten Ausführungsform ist die erfindungsgemäße Anordnung dadurch gekennzeichnet, dass einer oder mehrere Fluidtransportkanäle (KQ, KQ_1, KQ_2, KQ_3, KQ_4) jeweils ein oder mehrere steuerbare Ventile (SVQ, SVQ_1, SVQ_2) aufweisen und/oder einer oder mehrere Fluidtransportkanäle (KS, KS_1, KS_2, KS_3) jeweils ein oder mehrere steuerbare Ventile (SVS, SVS_1, SVS_2, SVS_3) aufweisen.

In einer weiteren bevorzugten Ausführungsform ist die erfindungsgemäße Anordnung dadurch gekennzeichnet, dass die steuerbaren Ventile (SVQ, SVQ_1, SVQ_2) den Flussquellen (FQ, FQ_1, FQ_2, FQ_3, FQ_4) und die steuerbaren Ventile (SVS, SVS_1, SVS_2, SVS_3) den Flusssenken (FS, FS_1, FS_2, FS_3) zugeordnet sind oder die steuerbaren Ventile (SVQ, SVQ_1, SVQ_2) und (SVS, SVS_1, SVS_2, SVS_3) den Vorrichtungen (VA, VA_1, VA_2, VA_3) zugeordnet sind.

Mit diesen beiden Ausführungsformen sind einerseits die Prozesse Zudosierung und Absaugung (Mediumaustausch) ausführbar.

In einer weiteren bevorzugten Ausführungsform ist die erfindungsgemäße Anordnung dadurch gekennzeichnet, dass mindestens eine Vorrichtung (VT) zum Teilen des Multifluidtransportkanals (MFTK) als steuerbarer Schalter (VSS) ausgeführt ist, mit dem ein Multifluidtransportkanalabschnitt (MFTK_X) des Multifluidtransportkanals (MFTK) als Fluidsequenzeingang und ein Multifluidtransportkanalabschnitt (MFKT_Y) des Multifluidtransportkanals (MFTK) als Fluidsequenzausgang verbunden ist und mit dem mindestens ein weiterer Multifluidtransportnebenkanalabschnitt (MFTNK_1-n)verbunden ist.

Unter "steuerbarer Schalter (VSS)" ist das erfindungsgemäße Umlenkmodul zu verstehen.

In einer weiteren bevorzugten Ausführungsform ist die erfindungsgemäße Anordnung dadurch gekennzeichnet, dass die Detektoren (D1, D2) mit den Signaleingängen mindestens einer Mess- und Steuereinrichtung (MSM) signaltechnisch verbunden sind und die Signalausgänge der mindestens einen Mess- und Steuereinrichtung (MSM) mit der mindestens einen Flussquelle (FQ) und/oder der mindestens einen Flusssenke (FS) und/oder dem mindestens einen steuerbaren Ventil (SV) und/oder dem mindestens einen steuerbaren Schalter (VSS) signaltechnisch verbunden sind.

In einem weiteren Aspekt betrifft die Erfindung ein Verfahren zum Generieren von Fluidsequenzen in einem Multifluidtransportkanal und / oder zum Konditionieren und /oder Detektieren der in dem Multifluidtransportkanal generierten Fluidsequenzen mit Hilfe der erfindungsgemäßen Anordnung. Weiterhin stellt die Erfindung ein Verfahren zum Umlenken von Fluidsequenzen und/oder zum Austausch von Kompartimenten von Fluidsequenzen bereit.

Für das erfindungsgemäße Verfahren gelten die bevorzugten Ausführungsformen und Vorteile der erfindungsgemäßen Anordnung gleichermaßen.

In einer bevorzugten Ausführungsform stellt die Erfindung ein Verfahren zum Generieren von Fluidsequenzen bereit, umfassend Fluidkompartimente (FK), eingebettet in mindestens ein weiteres, mit den Fluidkompartimenten nicht mischbares Fluid (FKN), in mindestens einem Multifluidtransportkanal (MFTK) und / oder zum Konditionieren und / oder Detektieren der in dem Multifluidtransportkanal (MFTK) generierten Fluidsequenzen,

dadurch gekennzeichnet, dass die Anordnung

- mindestens eine steuerbare Flussquelle (FQ) und mindestens einen mit der steuerbaren Flussquelle (FQ) verbundenen Fluidtransportkanal (KQ) und/oder mindestens eine steuerbare Flusssenke (FS) mit mindestens einem verbundenen Fluidtransportkanal (KS) zum Transport von mit den Fluidkompartimenten (FK) mischbaren Fluiden (FKM) und/oder mit den Fluidkompartimenten nicht mischbaren Fluiden (FKN) und mindestens ein Mess- und Steuermodul (MSM) aufweist, wobei die Fluidkompartimente (FK) optional anorganisches Material (MA) wie beispielsweise Polymerpartikel oder Hydrogele und/oder organisches Material (MO) wie beispielsweise Viren oder Zellen enthalten,

- wobei

  ○ ein mit einer steuerbaren Flussquelle (FQ_1) verbundener Fluidtransportkanal (KQ_1),

  ○ und mindestens ein weiterer mit einer Flussquelle (FQ_2) verbundener Fluidtransportkanal (KQ_2) und/oder

  ○ mindestens ein mit einer Flusssenke (FS_1) verbundener Fluidtransportkanal (KS_1)

in einen Multifluidtransportkanal (MFTK) münden, wobei dem Multifluidtransportkanal (MFTK) zugeordnet sind:

  i) mindestens eine Vorrichtung (VA) zum Verbinden des mindestens einen Fluidtransportkanals (KQ) und/oder des mindestens einen Fluidtransportkanals (KS) an den Multifluidtransportkanal (MFTK),

  ii) mindestens ein Detektor (D1), verbunden mit mindestens einem Mess- und Steuermodul (MSM), zum Erfassen und Steuern von optischen und/oder viskoelastischen und/oder elektrischen Eigenschaften der im Multifluidtransportkanal (MFTK) befindlichen Fluide (F) und/oder der darin befindlichen anorganischen und/oder organischen Materialien (M),

  iii) mindestens ein Detektor (D2), verbunden mit mindestens einer Mess- und Steuereinrichtung (MSM), zur Erfassung und Steuerung des Drucks in dem mindestens einen Multifluidtransportkanal (MFTK) und

  iv) mindestens eine Vorrichtung (VT) zum Verbinden von zwei Multifluidtransportkanalabschnitten (MFTK_1, MFTK_2) zu mindestens einem Multifluidtransportkanal (MFTK) oder zum Teilen des Multifluidtransportkanals (MFTK) als steuerbares Umlenkmodul (VSS) ausgeführt ist, mit dem ein Multifluidtransportkanalabschnitt (MFTK_X) des Multifluidtransportkanals (MFTK) als Fluidsequenzeingang und ein Multifluidtransportkanalabschnitt (MFTK_Y) des Multifluidtransportkanals (MFTK) als Fluidsequenzausgang verbunden ist und mit dem mindestens ein weiterer Multifluidtransportnebenkanal (MFTNK_1-n) verbunden ist.

Die Erfindung wird nachfolgend anhand von 6 Zeichnungen und 6 Ausführungsbeispielen näher charakterisiert. Es zeigen

Figur 1 (A) eine Explosionszeichnung einer Ausführungsform des erfindungsgemäßen Umlenkmoduls; (B) eine Darstellung eines Schließzylinders mit einem Zylinderelement und einer Druckfeder;

Figur 2 (A) und (B) Aufsichten auf einen schematisch dargestellten Anschlussstator des erfindungsgemäßen Umlenkmoduls;

Figur 3 das Prinzip der steuerbaren Generierung von Kompartimenten mit einem Gradientenmodul;

Figur 4 das Prinzip des Fluidaustausches;

Figur 5 das Prinzip des Umlenkmoduls;

Figur 6A die steuerbare Tropfengenerierung mit einer doppellumigen Sonde;

Figur 6B die steuerbare Tropfengenerierung mit einer doppellumigen Sonde und integriertem Umlenkmodul;

Figur 6C die steuerbare Tropfengenerierung mit einer doppellumigen Sonde und zwei integrierten Umlenkmodulen;

**Detaillierte Beschreibung der Figuren**

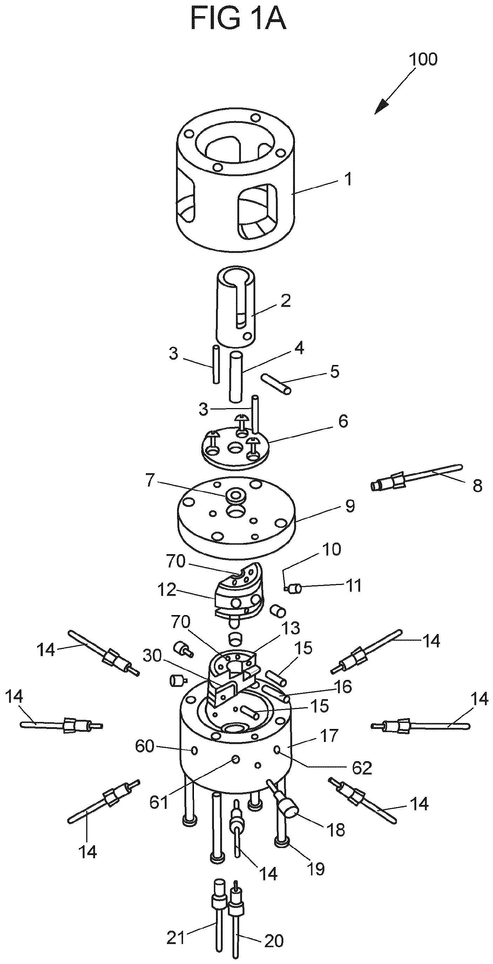

**Figur 1A** zeigt eine Explosionszeichnung einer Ausführungsform des erfindungsgemäßen Umlenkmoduls 100. Das Umlenkmodul 100 weist einen Anschlussstator 17 mit 8 Mantelflächenkanälen 60, 61, 62 auf. In die Mantelflächenkanäle 60, 61, 62 können die Anschlussleitungen 14 eingebracht werden.

In den Anschlussstator 17 wird der Schaltrotor eingebracht. Der Schaltrotor besteht in dieser Ausführungsform aus zwei Teilen. Einem ersten Teil 12 und einem zweiten Teil 13. In beiden Teilen wurde ein halbrunder Transportkanal 30 eingefräst. Nach dem Zusammensetzen des ersten Teils des Schaltrotors 12 und des zweiten Teils des Schaltrotors 13 entsteht auf der Kontaktebene der Schaltrotorteile ein Transportkanal 30 mit einem kreisförmigen Querschnitt. Der erste Teil des Schaltrotors 12 und der zweite Teil des Schaltrotors 13 werden in dieser Ausführungsform durch die Justierstifte 15 miteinander verbunden, hierfür sind entsprechende Bohrungen vorgesehen. Der Transportkanal verbindet einen Mantelflächenkanal 60, 61, 62 und damit die im Mantelflächenkanal eingebrachte Anschlussleitung 14 mit dem Grundflächenkanal 40. Der Grundflächenkanal 40 ist zentral in der Grundfläche 50 des Anschlussstators 17 angeordnet und kann eine Anschlussleitung 20 aufnehmen. Der Schaltrotor 12 & 13 weist weiterhin 7 Schließzylinder auf, die in der Mantelfläche des Schaltrotors angeordnet sind. Die Schließzylinder bestehen in dieser Ausführungsform jeweils aus einem einseitig abgerundeten Zylinderelement 11 und einer vorgespannten Druckfeder 10. Die Schließzylinder 10 & 11 sind derart im Schaltrotor 12 & 13 angeordnet, dass, wenn der Transportkanal 30 des Schaltrotors 12 & 13 einem Mantelflächenkanal 60 gegenübersteht, jeweils einer der n-1 Schließzylinder exakt einem weiteren Mantelflächenkanal 61, 62 des Anschlussstators 17 gegenübersteht und diesen verschließt. Das erfindungsgemäße Umlenkmodul 100 ermöglicht dadurch den Transport eines Fluids oder einer Tropfensequenz vom Grundflächenkanal 40 durch den Transportkanal 30 des Schaltrotors 12 & 13 zu genau einem Mantelflächenkanal 60 und andersherum.

Der Schaltrotor 12 & 13 wird mit Hilfe des Statordeckels 9 im Anschlussstator 17 in seiner horizontalen Ausrichtung positioniert. Die radiale Ausrichtung des gefügten Schaltrotors 12 & 13 im Anschlussstator 17 erfolgt über den passgenauen Einsatz des Schaltrotors im dafür vorgesehenen Hohlraum des Anschlussstators 17. Für die radiale Ausrichtung des Statordeckels 9, des Kopplungsrings 1 zum Anschlussstator 17 weisen alle drei Komponenten je zwei Bohrungen für die zwei Justierstifte 3 auf. Entsprechende passgenaue Bohrungen finden sich in allen drei Komponenten (1, 9, 17). Der Anschlussstator 17 und der Statordeckel 9 werden mit Hilfe der Montageschrauben 19 über den Kopplungsring 1 am Antrieb (Schrittmotor) befestigt. Eine Abdichtung zwischen Statordeckel 9 und Anschlussstator 17 erfolgt beispielsweise mittels Radial-Wellendichtung 7. In dieser Ausführungsform wird auf den Statordeckel 9 ein Radial-Wellendichtringdeckel 6 aufgebracht. Dieser wird mit Schrauben am Statordeckel 9 befestigt. Auf dem Radial-Wellendichtringdeckel 6 ist die Schaltachse 4 mit der Achsenkupplung 2 angeordnet. Die Achsenkupplung 2 und damit die Kraftübertragung erfolgt über die Schaltachse 4, die mit einem Kopplungsstift 5 mit der Achsenkupplung 2 verbunden ist. Die Schaltachse 4 ragt über eine zentrale Bohrung im Radial-Wellendichtringdeckel 6 und dem Statordeckel 9 in die Aufnahme 70 im Schaltrotor 12 & 13. In der Aufnahme 70 wird der Schaltrotor mit der Schaltachse 4 mit dem Kopplungsstift 16 verbunden. Durch einen an die Achsenkupplung angeschlossenen Schrittmotor kann der Schaltrotor in eine Drehbewegung versetzt werden.

Ein Kopplungsring 1 gewährleistet eine stabile Befestigung mit einem definierten Abstand des Antriebs zum Umlenkmodul 100 und wird ebenfalls mit Hilfe der Montageschrauben 19 am Antrieb fixiert. Weiterhin weist das Umlenkmodul 100 ein Justierschraube 18 zum Einstellen des Nullpunktes auf und zwei Entlüftungsanschlüsse, an die die Anschlussleitungen 21 und 8 angeschlossen werden können.

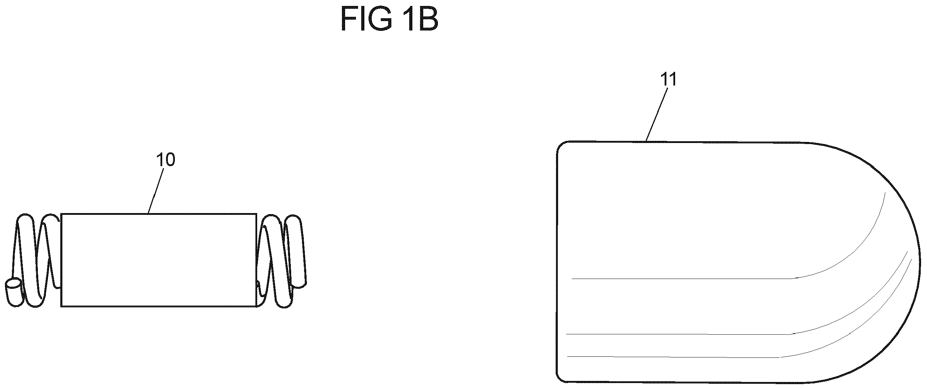

**Figur 1B** stellt einen Schließzylinder dar, der aus einem Zylinderelement 11 und einer Druckfeder 10 gebildet wird.

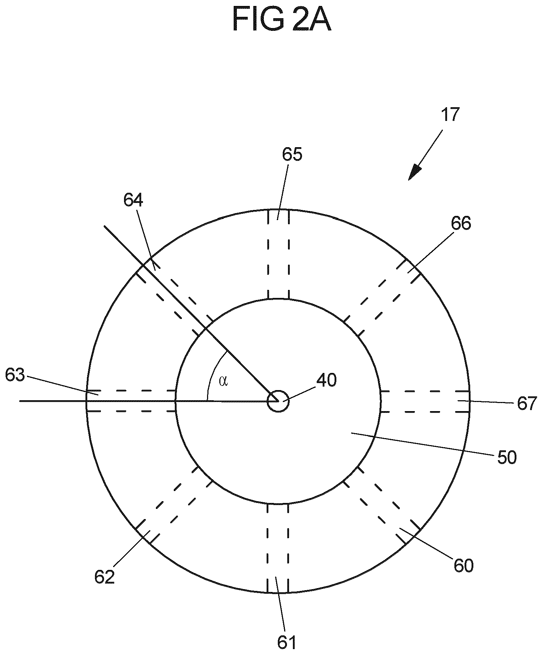

**Figur 2A** zeigt eine Aufsicht auf einen schematisch dargestellten Anschlussstator 17. Der Grundflächenkanal 40 in der Grundfläche 50 ist zu erkennen, ebenso wie 8 Mantelflächenkanäle 60-67. Die Figur 2A verdeutlicht die Definition des Winkels $\alpha$ zwischen benachbarten Mantelflächenkanälen 60-67 und ist beispielhaft für die benachbarten Mantelflächenkanäle 63 und 64 dargestellt.

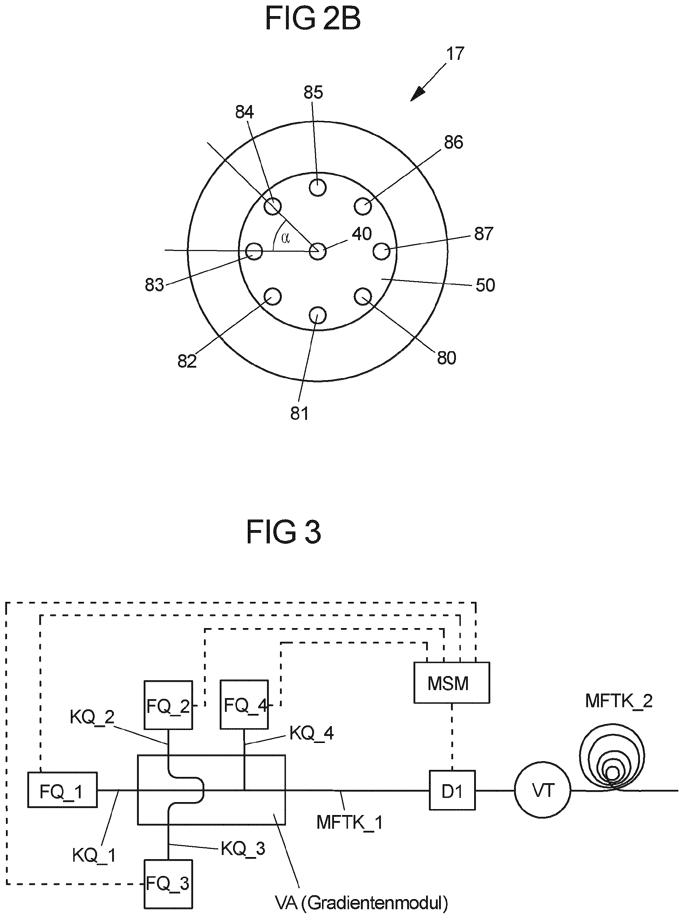

**Figur 2B zeigt** eine Aufsicht auf einen schematisch dargestellten Anschlussstator 17. Der Grundflächenkanal 40 in der Grundfläche 50 ist zu erkennen, ebenso wie 8 Bodenkanäle 80-87. Die Figur 2B verdeutlicht die Definition des Winkels $\alpha$ zwischen benachbarten Bodenkanälen 80-87 und ist beispielhaft für die benachbarten Bodenkanäle 83 und 84 dargestellt.

Die Figuren 3 bis 6C werden in den nachfolgend beschriebenen Ausführungsbeispielen beschrieben. Prinzipiell sind in den Figuren 3 bis 6C fluidische Kanäle mit durchgehenden Linien gezeichnet und elektrische Leitungen mit gestrichelten Linien.

**Ausführungsbeispiele**

**Beispiel 1** - **Generierung von Fluidsequenzen bestehend aus Kompartimenten eingebettet in ein oder mehrere nicht mischbare Fluide mit unterschiedlichen Konzentrationen an Inhaltsstoffen, beispielsweise Zellen**

Es sind vier Flussquellen FQ_1 bis FQ_4 vorhanden, wobei FQ_1 eine Zellsuspension mit konstanter Zellzahl, FQ_2 und FQ_3 zellfreie Nährlösung und FQ_4 PFD transportieren. Die korrespondierenden Fluidkanäle KQ_1 bis KQ_4 münden in der Vorrichtung VA, ausgeführt als Gradientenmodul, in den Multifluidtransportkanalabschnitte MFTK_1 des Multifluidtransportkanals MFTK und generieren eine Fluidsequenz. Diese durchläuft den Detektor D1, dessen Signale ausgewertet werden vom Mess- und Steuermodul MSM, welches wiederum die Flussquellen FQ_1 bis FQ_4 steuert, wodurch Länge und Abstand der Kompartimente beeinflusst werden. Die Fluidsequenz durchläuft die Vorrichtung VT in den Multifluidtransportkanalabschnitt MFTK_2 des Multifluidtransportkanals MFTK, der als Speichermodul (Coil) ausgeführt ist und nach der Befüllung mit der Fluidsequenz mittels der Vorrichtung VT vom Multifluidtransportkanalabschnitt MFTK_1 getrennt und beispielsweise zum Kultivieren in einem Inkubator gelagert wird. Die hier erläuterte Vorgehensweise ist anhand von Figur 3 nachvollziehbar. Detektor D1 entspricht dem Analysenmodul der erfindungsgemäßen Vorrichtung, das Mess- und Steuermodul MSM der Steuereinrichtung. In einer weiteren Ausführungsform kann anstelle der Vorrichtung VT das erfindungsgemäße Umlenkmodul (VSS) enthalten sein, an die mehrere Speichermodule angeschlossen sind. Die Analyse eines oder mehrerer Kompartimente einer Fluidsequenz und/oder kompletter Fluidsequenzen und/oder ihrer Phasengrenzen erfolgt mit dem Detektor D1.

In einer alternativen Ausführungsform sind fünf Flussquellen FQ_1 bis FQ_5 vorhanden. Die korrespondierenden Fluidkanäle KQ_1 bis KQ_5 münden in die Vorrichtung VA, ausgeführt als Gradientenmodul, in den Multifluidtransportkanalabschnitte MFTK_1 des Multifluidtransportkanals MFTK und generieren eine Fluidsequenz. Die Einleitung der zellfreien Nährlösung und der Zellsuspension zur Erzeugung eines Gradienten kann beispielsweise über FQ_1 bis FQ_3 über die dazugehörigen Kanäle KQ_1 bis KQ_3 erfolgen. Die Einleitung des Trägerfluids PFD durch FQ_4 und FQ_5 in die Eingangskanäle KQ_4 und KQ_5 führt im Bereich der Einmündung der beiden Kanäle in den Hauptkanal zur Tropfenbildung. Die Fluidkanäle KQ_4 und KQ_5 sind bevorzugt genau gegenüberliegend zueinander angeordnet.

**Beispiel 2: Austausch von in Kompartimenten von Fluidsequenzen befindlichen Fluiden**

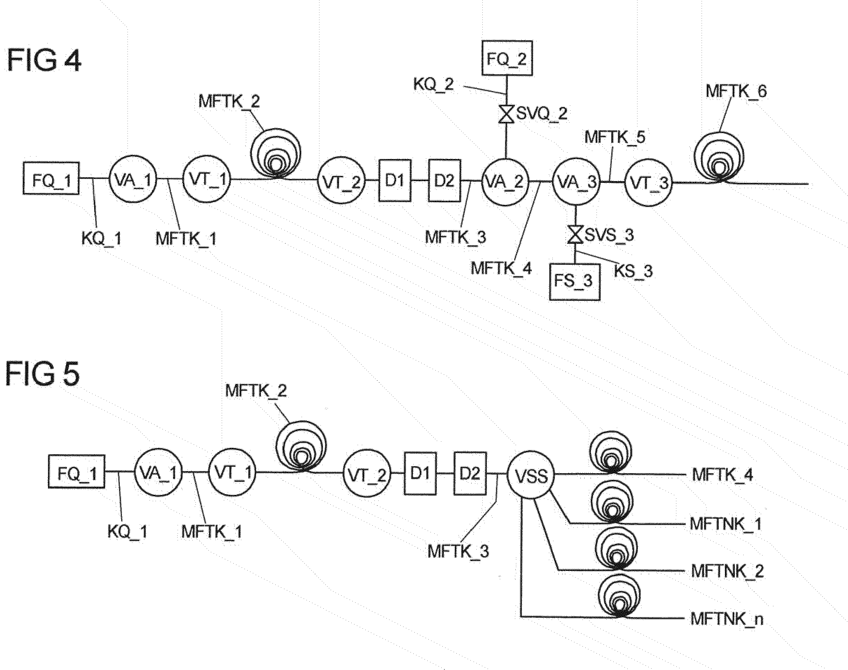

Eine Flussquelle FQ_1 transportiert ein Fluid in den Multifluidtransportkanalabschnitt MFTK_2, der als Speichermodul ausgebildet ist. Das Fluid verdrängt die im Speichermodul befindliche Fluidsequenz einschließlich der darin befindlichen Kompartimente und transportiert sie über die Vorrichtungen VT_2, VA_2, VA_3 und VT_3 in den Multifluidtransportkanalabschnitt MFTK_6, der ebenfalls als Speichermodul ausgebildet ist. Die zwischen den Vorrichtungen VT_2 und VA_2 positionierten Detektoren D1 und D2 bestimmen die Anzahl, die Länge und den Abstand der Kompartimente sowie den Druck im Multifluidtransportkanal MFTK, geben diese Parameter weiter an das Mess- und Steuermodul MSM (in Figur 4 nicht dargestellt), welches wiederum die Flussquellen FQ_1 und FQ_2, die Flusssenke FS_3 und die steuerbaren Ventile SVQ_2 und SVS_3 derart ansteuert, dass die Flussquelle FQ_2 durch den Fluidtransportkanal KQ_2 und das steuerbare Ventile SVQ 2 ein definiertes Fluidvolumen in ein im Bereich der Mündung des Fluidtransportkanals KQ_2 in den Multifluidtransportkanal MFTK befindliches Kompartiment hinein transportiert, dieses Kompartiment mittels der Flussquelle FQ_1 zur Mündung des Transportkanals KS_3 in den Multifluidtransportkanal MFTK transportiert wird und dort die Flusssenke FS_3 durch das steuerbare Ventile SVS_3 und den Fluidtransportkanal KS_3 ein definiertes Fluidvolumen aus dem im Bereich der Mündung befindlichen Kompartiment heraus transportiert.

In einer alternativen Ausführungsform entfällt die Vorrichtung VA_3 und die Fluidtransportkanäle KQ_2 und KS_3 münden in der Vorrichtung VA_2 in den Multifluidtransportkanal MFTK und der Fluidaustausch erfolgt simultan.

Anstelle der Vorrichtungen VT_1, VT_2 und VT_3 kann das erfindungsgemäße Umlenkmodul enthalten sein, an die mehrere Speichermodule angeschlossen sind. Dies betrifft auch die alternative Ausführungsform. In einer Ausführungsform sowie der alternativen Ausführungsform kann die Vorrichtung VT_1 und/oder VT_2 und/oder VT_3 ein erfindungsgemäßes Umlenkmodul sein.

Die Analyse zum Erfassen von optischen und/oder elektrischen und/oder viskoelastischen Eigenschaften eines oder mehrerer Kompartimente einer Fluidsequenz und/oder kompletter Fluidsequenzen erfolgt mit dem Detektor D1.

Die hier erläuterte Vorgehensweise ist anhand von Figur 4 nachvollziehbar.

**Beispiel 3: Zugabe von Fluiden, optional beinhaltend anorganisches und/oder organisches Material, zu den Kompartimenten von Fluidsequenzen**

Eine Flussquelle FQ_1 transportiert ein Fluid in den Multifluidtransportkanalabschnitt MFTK 2, der als Speichermodul ausgebildet ist. Das Fluid verdrängt die im Speichermodul befindliche Fluidsequenz einschließlich der darin befindlichen Kompartimente und transportiert sie über die Vorrichtungen VT_2, VA_2 und VT_3 in den Multifluidtransportkanalabschnitt MFTK_6, der ebenfalls als Speichermodul ausgebildet ist. Die zwischen den Vorrichtungen VT_2 und VA_2 positionierten Detektoren D1 und D2 bestimmen die Anzahl, die Länge und den Abstand der Kompartimente sowie den Druck im Multifluidtransportkanal MFTK, geben diese Parameter weiter an das Mess- und Steuermodul MSM (in Figur 4 nicht dargestellt), welches wiederum die Flussquellen FQ_1 und FQ_2 sowie das steuerbare Ventil SVQ 2 derart ansteuert, dass die Flussquelle FQ_2 durch den Fluidtransportkanal KQ_2 und das steuerbare Ventile SVQ 2 ein definiertes Fluidvolumen in ein im Bereich der Mündung des Fluidtransportkanals KQ_2 in den Multifluidtransportkanal MFTK befindliches Kompartiment hinein transportiert.

Anstelle der Vorrichtungen VT_1, VT_2 und VT_3 kann das erfindungsgemäße Umlenkmodul enthalten sein, an das mehrere Speichermodule angeschlossen sind. In einer Ausführungsform kann daher die Vorrichtung VT_1 und/oder VT_2 und/oder VT_3 ein erfindungsgemäßes Umlenkmodul sein.

Die Analyse zum Erfassen von optischen und/oder elektrischen und/oder viskoelastischen Eigenschaften eines oder mehrerer Kompartimente einer Fluidsequenz und/oder kompletter Fluidsequenzen erfolgt mit dem Detektor D1.

Die hier erläuterte Vorgehensweise ist anhand von Figur 4, aber ohne FS_3, SVS_3, VA_3 und KS_3 nachvollziehbar.

**Beispiel 4: Entnahme von Fluiden aus Kompartimenten von Fluidsequenzen, einschließlich des dort ggf. vorhanden anorganischen und/oder organischen Materials**

Eine Flussquelle FQ_1 transportiert ein Fluid in den Multifluidtransportkanalabschnitt MFTK 2, der als Speichermodul ausgebildet ist. Das Fluid verdrängt die im Speichermodul befindliche Fluidsequenz einschließlich der darin befindlichen Kompartimente und transportiert sie über die Vorrichtungen VT_2, VA_3 und VT_3 in den Multifluidtransportkanalabschnitt MFTK_6, der ebenfalls als Speichermodul ausgebildet ist. Die zwischen den Vorrichtungen VT_2 und VA_3 positionierten Detektoren D1 und D2 bestimmen die Anzahl, die Länge und den Abstand der Kompartimente sowie den Druck im Multifluidtransportkanal MFTK, geben diese Parameter weiter an das Mess- und Steuermodul MSM (in Figur 4 nicht dargestellt), welches wiederum die Flussquelle FQ_1 und die Flusssenke FS_3 sowie das steuerbare Ventil SVS_3 derart ansteuert, dass die Flusssenke FS_3 durch den Fluidtransportkanal KS_3 und das steuerbare Ventile SVS_3 ein definiertes Fluidvolumen aus einem im Bereich der Mündung des Fluidtransportkanals KS_3 in den Multifluidtransportkanal MFTK befindlichen Kompartiment heraus transportiert.

Anstelle der Vorrichtungen VT_1, VT_2 und VT_3 kann das erfindungsgemäße Umlenkmodul enthalten sein, an die mehrere Speichermodule angeschlossen sind. In einer Ausführungsform kann daher die Vorrichtung VT_1 und/oder VT_2 und/oder VT_3 ein erfindungsgemäßes Umlenkmodul sein.

Die Analyse zum Erfassen von optischen und/oder elektrischen und/oder viskoelastischen Eigenschaften eines oder mehrerer Kompartimente einer Fluidsequenz und/oder kompletter Fluidsequenzen erfolgt mit dem Detektor D1.

Die hier erläuterte Vorgehensweise ist anhand von Figur 4, aber ohne FQ_2, SVQ_2, VA_2 und KQ_2 nachvollziehbar.

**Beispiel 5: Umlenken eines oder mehrerer Kompartimente einer Fluidsequenz und/oder kompletter Fluidsequenzen**

Eine Flussquelle FQ_1 transportiert ein Fluid in den Multifluidtransportkanalabschnitt MFTK 2, der als Speichermodul ausgebildet ist. Das Fluid verdrängt die im Speichermodul befindliche Fluidsequenz einschließlich der darin befindlichen Kompartimente und transportiert sie über die Vorrichtungen VT_2 und VSS, als steuerbarer Schalter (Umlenkmodul) ausgeführt, in den Multifluidtransportkanalabschnitt MFTK_4. MFTK_4 entspricht dem bereits beschriebenen Multifluidtransportkanalabschnitt (MFTK_Y) des Multifluidtransportkanals (MFTK) als Fluidsequenzausgang. Durch Umschalten des steuerbaren Schalters VSS kann die Fluidsequenz oder Teile davon oder einzelne Kompartimente in Multifluidtransportkanalnebenabschnitte MFTNK_1(...n), die ebenfalls als Speichermodul ausgebildet sein können, transportiert werden. Die Detektoren D1 und D2 bestimmen die Anzahl, die Länge und den Abstand der Kompartimente sowie den Druck im Multifluidtransportkanal MFTK, die Summe aller MFTK_1 bis MFTK_4 und MFTNK_1 bis MFTNK_n, geben diese Parameter weiter an das Mess- und Steuermodul MSM (in Figur 5 nicht dargestellt), welches wiederum die Flussquelle FQ_1 und den steuerbaren Schalter VSS derart ansteuert, dass die komplette Fluidsequenz oder Teile davon oder einzelne Kompartimente in den Multifluidtransportkanal MFTK_4 und/oder in einen oder mehrere der Multifluidtransportkanalnebenabschnitte MFTNK_1 bis MFTNK_n transportiert werden.

Die hier erläuterte Vorgehensweise ist anhand von Figur 5 nachvollziehbar.

Die Analyse zum Erfassen von optischen

33      **EP 4 122 604 A2**      34

und/oder elektrischen und/oder viskoelastischen Eigenschaften eines oder mehrerer Kompartimente einer Fluidsequenz und/oder kompletter Fluidsequenzen erfolgt mit dem Detektor D1.MFTK_3 entspricht dem bereits beschriebenen Multifluidtransportkanalabschnitt (MFTK_X) des Multifluidtransportkanals (MFTK) als Fluidsequenzeingang.

**Beispiel 6: Generierung von Fluidsequenzen mittels einer doppellumigen Sonde (Zweifluidsonde)**

Es ist eine Flussquelle FQ_1 und eine Flusssenke FS_1 vorhanden, wobei FQ_1 die kontinuierliche Phase, z.B. PFD, transportiert. Der korrespondierende Fluidkanal KQ_1 mündet in die Vorrichtung VA_1, die als Zweifluidsonde ausgeführt ist und die in das zu kompartimentierende Fluid, beispielsweise eine Zellsuspension, die zur Homogenisierung gerührt oder geschüttelt werden kann, eintaucht. Der Multifluidtransportkanalabschnitt MFTK_1 ist über die Vorrichtungen VT_1 und VT_2, den Multifluidtransportkanalabschnitt MFTK_2 und den Fluidkanal KS_1 mit der Flusssenke FS_1 verbunden und mündet ebenfalls in die Vorrichtung VA_1. Die Signale des Detektors D1 dienen der Charakterisierung der Fluidsequenz im MFTK_1 und werden vom MSM verarbeitet, welches wiederum die Fließraten von FQ_1 und FS_1 steuert, wodurch Länge und Abstand der Kompartimente der Fluidsequenz beeinflusst werden. Die Fluidsequenz durchläuft die Vorrichtung VT_1 in den Multifluidtransportkanalabschnitt MFTK_2, der als Speichermodul ausgeführt ist und nach der Befüllung mit der Fluidsequenz mittels der Vorrichtungen VT_1 und VT_2 vom Multifluidtransportkanalabschnitt MFTK_1 und vom Fluidkanal KS_1 getrennt und beispielsweise zum Kultivieren in einem Inkubator gelagert wird.

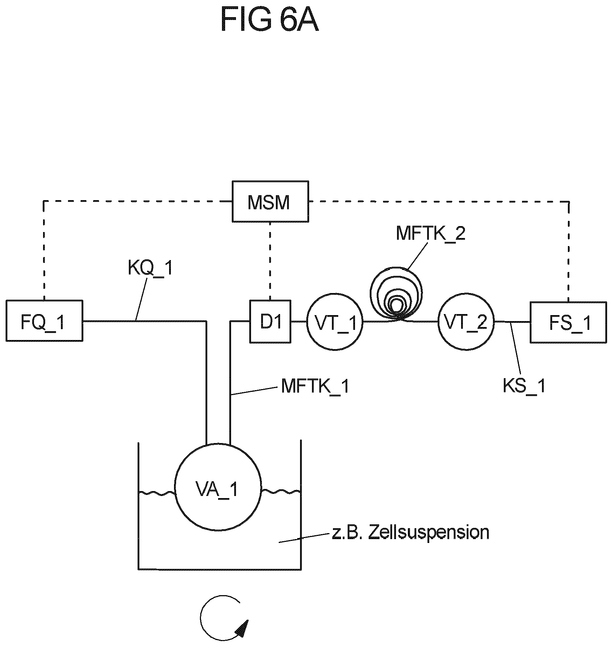

Die hier erläuterte Vorgehensweise ist anhand von Figur 6A nachvollziehbar.

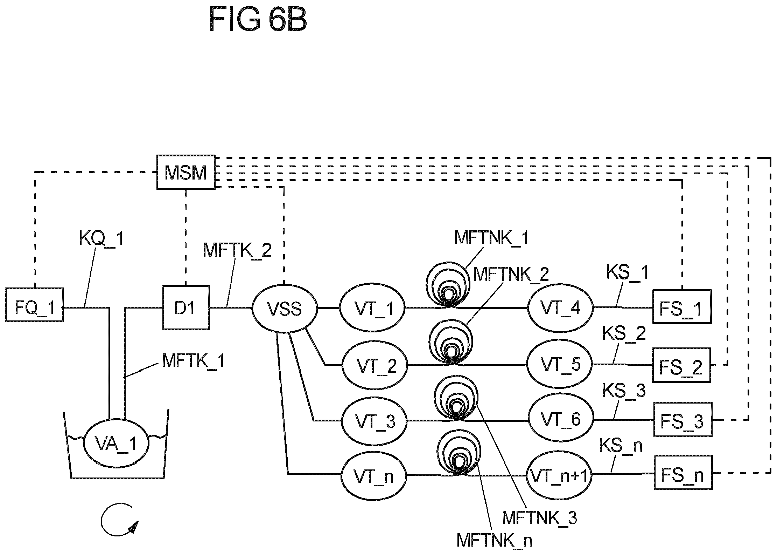

Figur 6B zeigt die steuerbare Tropfengenerierung mit der doppellumigen Sonde und integriertem Umlenkmodul VSS. Durch Umschalten des steuerbaren Schalters VSS (= Umlenkmodul) kann die Fluidsequenz oder Teile davon in Multifluidtransportkanalnebenabschnitte MFTNK_1 - MFTNK_n, die ebenfalls als Speichermodul ausgebildet sein können, transportiert werden. Diese sind mit den Vorrichtungen VT_1 - VT_n sowie mit VT_4 bis VT_n+1 verbunden, an die wiederum Flusssenken FS_1 - FS_n angeschlossen sind. Durch die Verbindung der Speichermodule mit den Vorrichtungen VT_1 bis VT_n+1 können sie jeweils vom Umlenkmodul und der jeweiligen FS, hier FS_1 bis FS_n getrennt und beispielsweise zum Kultivieren in einem Inkubator gelagert werden.

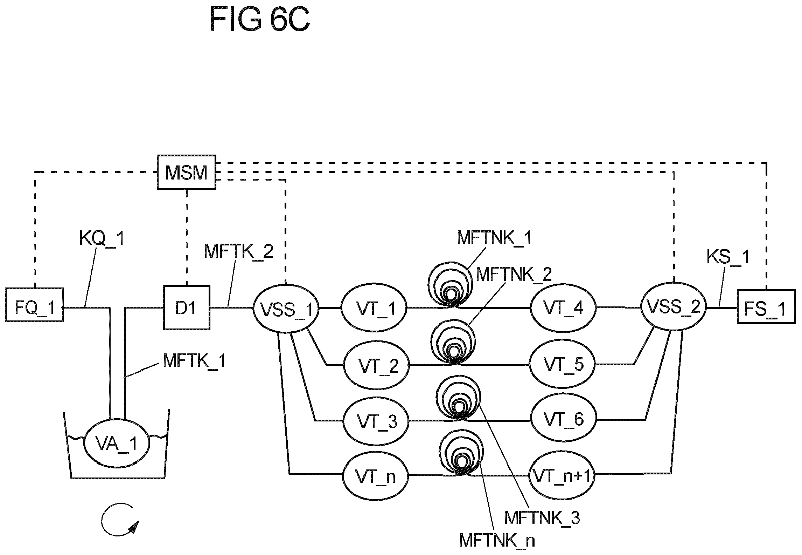

Figur 6c zeigt die steuerbare Tropfengenerierung mittels doppellumiger Sonde und zwei integrierten Umlenkmodulen. Bei Verwendung zweier Umlenkmodule ist nur eine Flusssenke FS_1 nötig. Bei Verwendung von Spritzenpumpen als Flusssenken können damit Kosten gespart werden (z.B. bei acht Speichermodulen und nur einem Umlenkmodul werden acht Spritzenpumpen benötigt, bei Einsatz von zwei Umlenkmodulen wird nur eine Spritzenpumpe benötigt).

**Liste der Bezugzeichen**

| | |
|---|---|
| 1 | Kopplungsring |
| 2 | Achsenkupplung |
| 3 | Justierstift |
| 4 | Schaltachse |
| 5 | Kopplungsstift |
| 6 | Radial-Wellendichtringdeckel |
| 7 | Radial-Wellendichtring |
| 8 | Entlüftungsanschluss |
| 9 | Statordeckel |
| 10 | Druckfeder |
| 11 | Zylinderelement |
| 12 | erster Teil Schaltrotor |
| 13 | zweiter Teil Schaltrotor |
| 14 | Anschlussleitung |
| 15 | Justierstift |
| 16 | Kopplungsstift |
| 17 | Anschlussstator |
| 18 | Nullpunkt Justierschraube |
| 19 | Montageschraube |
| 20 | Anschlussleitung |
| 21 | Entlüftungsanschluss |
| 30 | Transportkanal |
| 40 | Grundflächenkanal |
| 50 | Grundfläche |
| 60-67 | Mantelflächenkanal |
| 70 | Aufnahme Schaltachse |
| 80-87 | Bodenkanal |
| 100 | Umlenkmodul |
| FQ | steuerbare Flussquelle, die mit einem Schüttel-/Rührgefäß, das begast werden kann, verbunden sein kann |
| FQ_1(...n) | steuerbare Flussquelle 1(...n) |
| FS | steuerbare Flusssenke |
| FS_1(...n) | steuerbare Flusssenke 1(...n) |
| KQ | der zur steuerbaren FQ gehörige Fluidtransportkanal |
| KQ_1(...n) | der zur steuerbaren FQ_1(...n) gehörige Fluidtransportkanal KQ_1(...n) |
| KS | der zur steuerbaren FS gehörige Fluidtransportkanal |
| KS_1(...n) | der zur steuerbaren FS_1(...n) gehörige Fluidtransportkanal KS_1(...n) |
| MFTK | Multifluidtransportkanal, Summe aller MFTK_1 bis MFTK_n |
| MFTK_1(...n) | Multifluidtransportkanalabschnitt 1(...n) |
| MFTNK | Multifluidtransportkanalnebenabschnitt |
| MFTNK_1(...n) | Multifluidtransportkanalnebenabschnitte 1(...n) |

| | |
|---|---|
| MSM | Mess- und Steuermodul |
| VA | Vorrichtung zum Verbinden der Fluidtransportkanäle KQ bzw. KS an den Multifluidtransportkanal MFTK |
| VA_1(...n) | Vorrichtungen zum Verbinden der Fluidtransportkanäle KQ_1(...n) bzw. KS_1(...n) an die Multifluidtransportkanäle MFTK_1(...n) |
| VT | Vorrichtung zum Teilen und Verbinden des Multifluidtransportkanals MFTK in Multifluidtransportkanalab-schnitte bzw. Multifluidtransportka-nalnebenabschnitte |
| VT_1(...n) | Vorrichtung zum Teilen und Verbinden des Multifluidtransportkanals MFTK in Multifluidtransportkanalabschnitte MFTK_1, MFTK_2, ..MFTK_n bzw. Multifluidtransportkanalnebenabschnitte MFTNK_1, MFTKN 2, ... MFTKN_n |
| VSS | Umlenkmodul |
| D | Detektor allgemein |
| D1 | Detektor D1 zum Erfassen von optischen und/oder elektrischen und/oder viskoelastische Eigenschaften der im Multifluidtransportkanal MFTK befindlichen Fluide F ein-schließlich der darin befindlichen an-organischen und/oder organischen Materialien M wie auch der Phasengrenzen |
| D2 | Detektor D2 zum Erfassen des Drucks im Multifluidtransportkanal MFTK |
| SVS | steuerbares Ventil in Verbindung mit Fluidtransportkanal KS der Fluidsenke FS |
| SVQ | steuerbares Ventil in Verbindung mit Fluidtransportkanal KQ der Fluidquelle FQ |

**Patentansprüche**

1. Umlenkmodul (100), aufweisend

   • einen Anschlussstator (17), aufweisend die Form eines Hohlzylinders mit einer geschlossenen Grundfläche (50);
   • einen Grundflächenkanal (40), der zentrisch in der Grundfläche (50) des Anschlussstators angeordnet ist;
   • n Mantelflächenkanäle (60-67) oder Bodenkanäle (80-87), wobei n $\geq$ 2 und $n \in N$;
   • ein Schaltrotor, aufweisend einen Transportkanal (30), n-1 Schließzylinder (11), wobei n E *N;*
   • einen Statordeckel (9);

   • Dichtelemente zur Gewährleistung aseptischer Bedingungen;
   • eine Schaltachse (4) mit einer Achsenkupplung;

   wobei der Schaltrotor durch die Schaltachsen (4) mit der Achsenkupplung verbunden ist und drehbar axial in dem Anschlussstator (17) angeordnet ist.

2. Umlenkmodul (100) gemäß Anspruch 1, **dadurch gekennzeichnet, dass** der Schaltrotor zweiteilig ausgebildet ist.

3. Umlenkmodul (100) gemäß einem der vorangegangenen Ansprüche, **dadurch gekennzeichnet, dass** der Grundflächenkanal (40) einem Ende des Transportkanals (30) des Schaltrotors exakt gegenübersteht und dass ein Mantelflächenkanal (60-67) oder ein Bodenkanal (80-87) einem weiteren Ende des Transportkanals (30) exakt gegenübersteht.

4. Umlenkmodul (100) gemäß einem der vorangegangenen Ansprüche, **dadurch gekennzeichnet, dass** der Transportkanal (30) des Schaltrotors einen kreisförmigen Querschnitt aufweist.

5. Umlenkmodul (100) gemäß einem der vorangegangenen Ansprüche, **dadurch gekennzeichnet, dass** das Umlenkmodul 2 bis 64 Mantelflächenkanäle (60-67) oder Bodenkanäle (80-87) aufweist, bevorzugt 2 bis 16, besonders bevorzugt 2 bis 8 Mantelflächenkanäle (60-67) oder Bodenkanäle (80-87) aufweist.

6. Umlenkmodul (100) gemäß einem der vorangegangenen Ansprüche, **dadurch gekennzeichnet, dass** zueinander benachbarte Mantelflächenkanäle (60-67) oder Bodenkanäle (80-87) der n Mantelflächenkanäle (60-67) oder Bodenkanäle (80-87) in ei-nem Winkel $\alpha = \dfrac{360°}{n}$ zueinander angeordnet sind.

7. Umlenkmodul (100) gemäß einem der vorangegangenen Ansprüche, **dadurch gekennzeichnet, dass** die n-1 Schließzylinder (11) vorgespannte Zylinder sind, wobei die Vorspannung beispielsweise durch Druckfedern (10) oder elektromagnetisch, wie mit Piezoelementen, erzeugt werden kann.

8. Umlenkmodul (100) gemäß einem der vorangegangenen Ansprüche, **dadurch gekennzeichnet, dass** die Oberfläche des Transportkanals (30) des Schaltrotors hydrophob oder hydrophil ist.

9. Umlenkmodul (100) gemäß einem der vorangegangenen Ansprüche, **dadurch gekennzeichnet, dass** in den Transportkanal (30) ein Schlauch eingelegt ist.

10. Umlenkmodul (100) gemäß einem der vorangegangenen Ansprüche, **dadurch gekennzeichnet, dass** alle fluidführenden Elemente des Umlenkmoduls PTFE aufweisen oder aus PTFE bestehen.

11. Umlenkmodul (100) gemäß einem der vorangegangenen Ansprüche, **dadurch gekennzeichnet, dass** das Umlenkmodul (100) weiterhin zwei Entlüftungsanschlüsse (8, 21) aufweist.

12. Anordnung zum Generieren von Fluidsequenzen, bestehend aus Fluidkompartimenten, eingebettet in mindestens ein weiteres, mit den Fluidkompartimenten nicht mischbares Fluid, in mindestens einem Multifluidtransportkanal (MFTK) und / oder zum Konditionieren und / oder Detektieren der in dem Multifluidtransportkanal (MFTK) generierten Fluidsequenzen,
**dadurch gekennzeichnet, dass**

• die Anordnung mindestens eine steuerbare Flussquelle (FQ) und mindestens einen mit der steuerbaren Flussquelle (FQ) verbundenen Fluidtransportkanal (KQ) und/oder mindestens eine steuerbare Flusssenke (FS) mit mindestens einem verbundenen Fluidtransportkanal (KS) zum Transport von mit den Fluidkompartimenten mischbaren Fluiden und/oder mit den Fluidkompartimenten nicht mischbaren Fluiden und mindestens ein Mess- und Steuermodul (MSM) aufweist, wobei die Fluidkompartimente optional anorganisches Material wie beispielsweise Polymerpartikel oder Hydrogele und/oder organisches Material wie beispielsweise Viren oder Zellen enthalten,
• wobei

∘ ein mit einer steuerbaren Flussquelle (FQ_1) verbundener Fluidtransportkanal (KQ_1),
∘ und mindestens ein weiterer mit einer Flussquelle (FQ_2) verbundener Fluidtransportkanal (KQ_2)
∘ und/oder mindestens ein mit einer Flusssenke (FS_1) verbundener Fluidtransportkanal (KS_1)

in einen Multifluidtransportkanal (MFTK) münden, wobei dem Multifluidtransportkanal (MFTK) zugeordnet sind:

i) mindestens eine Vorrichtung (VA) zum Verbinden des mindestens einen Fluidtransportkanals (KQ) und/oder des mindestens einen Fluidtransportkanals (KS) an den Multifluidtransportkanal (MFTK),
ii) mindestens ein Detektor (D1), verbunden mit mindestens einem Mess- und Steuermodul (MSM), zum Erfassen und Steuern von optischen und/oder viskoelastischen und/oder elektrischen Eigenschaften der im Multifluidtransportkanal (MFTK) befindlichen Fluide und Fluidkompartimente und/oder der darin befindlichen anorganischen und/oder organischen Materialien,
iii) mindestens ein Detektor (D2), verbunden mit mindestens einer Mess- und Steuereinrichtung (MSM), zur Erfassung und Steuerung des Drucks in dem mindestens einen Multifluidtransportkanal (MFTK) und
iv) mindestens eine Vorrichtung (VT) zum Verbinden von zwei Multifluidtransportkanalabschnitten (MFTK_1, MFTK_2) zu mindestens einem Multifluidtransportkanal (MFTK) oder zum Teilen des Multifluidtransportkanals (MFTK) als steuerbares Umlenkmodul (VSS) ausgeführt ist, mit dem ein Multifluidtransportkanalabschnitt (MFTK_X) des Multifluidtransportkanals (MFTK) als Fluidsequenzeingang und ein Multifluidtransportkanalabschnitt (MFTK_Y) des Multifluidtransportkanals (MFTK) als Fluidsequenzausgang verbunden ist und mit dem mindestens ein weiterer Multifluidtransportnebenkanal (MFTNK_1-n) verbunden ist.

13. Anordnung nach Anspruch 12, **dadurch gekennzeichnet, dass** einer oder mehrere Fluidtransportkanäle (KQ) jeweils ein oder mehrere steuerbare Ventile (SVQ) aufweisen und/oder einer oder mehrere Fluidtransportkanäle (KS) jeweils ein oder mehrere steuerbare Ventile (SVS) aufweisen.

14. Anordnung nach Anspruch 12 oder 13, **dadurch gekennzeichnet, dass** die steuerbaren Ventile (SVQ) den Flussquellen (FQ) und die steuerbaren Ventile (SVS) den Flusssenken (FS) zugeordnet sind oder die steuerbaren Ventile (SVQ) und (SVS) den Vorrichtungen (VA) zugeordnet sind.

15. Anordnung nach einem der Ansprüche 12 bis 14, **dadurch gekennzeichnet, dass** die Detektoren (D1, D2) mit den Signaleingängen mindestens eines Mess- und Steuermoduls (MSM) signaltechnisch verbunden sind und die Signalausgänge des mindestens einen Mess- und Steuermoduls (MSM) mit der mindestens einen Flussquelle (FQ) und/oder der mindestens einen Flusssenke (FS) und/oder dem mindestens einen steuerbaren Ventil (SV) und/oder dem mindestens einen steuerbaren Umlenkmodul (VSS) signaltechnisch verbunden sind.

**16.** Verfahren zum Generieren von Fluidsequenzen bereit, umfassend Fluidkompartimente (FK), eingebettet in mindestens ein weiteres, mit den Fluidkompartimenten nicht mischbares Fluid (FKN), in mindestens einem Multifluidtransportkanal (MFTK) und / oder zum Konditionieren und / oder Detektieren der in dem Multifluidtransportkanal (MFTK) generierten Fluidsequenzen,
**dadurch gekennzeichnet, dass** das Verfahren mit einer Anordnung gemäß einem der Ansprüche 1 bis 15 durchgeführt wird und die Anordnung

• mindestens eine steuerbare Flussquelle (FQ) und mindestens einen mit der steuerbaren Flussquelle (FQ) verbundenen Fluidtransportkanal (KQ) und/oder mindestens eine steuerbare Flusssenke (FS) mit mindestens einem verbundenen Fluidtransportkanal (KS) zum Transport von mit den Fluidkompartimenten (FK) mischbaren Fluiden (FKM) und/oder mit den Fluidkompartimenten nicht mischbaren Fluiden (FKN) und mindestens ein Mess- und Steuermodul (MSM) aufweist, wobei die Fluidkompartimente (FK) optional anorganisches Material (MA) wie beispielsweise Polymerpartikel oder Hydrogele und/oder organisches Material (MO) wie beispielsweise Viren oder Zellen enthalten,
• wobei

◦ ein mit einer steuerbaren Flussquelle (FQ_1) verbundener Fluidtransportkanal (KQ_1),
◦ und mindestens ein weiterer mit einer Flussquelle (FQ_2) verbundener Fluidtransportkanal (KQ_2) und/oder
◦ mindestens ein mit einer Flusssenke (FS_1) verbundener Fluidtransportkanal (KS_1)

in einen Multifluidtransportkanal (MFTK) münden, wobei dem Multifluidtransportkanal (MFTK) zugeordnet sind:

i) mindestens eine Vorrichtung (VA) zum Verbinden des mindestens einen Fluidtransportkanals (KQ) und/oder des mindestens einen Fluidtransportkanals (KS) an den Multifluidtransportkanal (MFTK),
ii) mindestens ein Detektor (D1), verbunden mit mindestens einem Mess- und Steuermodul (MSM), zum Erfassen und Steuern von optischen und/oder viskoelastischen und/oder elektrischen Eigenschaften der im Multifluidtransportkanal (MFTK) befindlichen Fluide (F) und/oder der darin befindlichen anorganischen und/oder organischen Materialien (M),
iii) mindestens ein Detektor (D2), verbunden mit mindestens einem Mess- und Steuermodul (MSM), zur Erfassung und Steuerung des Drucks in dem mindestens einen Multifluidtransportkanal (MFTK) und
iv) mindestens eine Vorrichtung (VT) zum Verbinden von zwei Multifluidtransportkanalabschnitten (MFTK_1, MFTK_2) zu mindestens einem Multifluidtransportkanal (MFTK) oder zum Teilen des Multifluidtransportkanals (MFTK) als steuerbares Umlenkmodul (VSS) ausgeführt ist, mit dem ein Multifluidtransportkanalabschnitt (MFTK_X) des Multifluidtransportkanals (MFTK) als Fluidsequenzeingang und ein Multifluidtransportkanalabschnitt (MFTK_Y) des Multifluidtransportkanals (MFTK) als Fluidsequenzausgang verbunden ist und mit dem mindestens ein weiterer Multifluidtransportnebenkanal (MFTNK_1-n) verbunden ist.

# FIG 1A

FIG 1B

# FIG 2A

# FIG 2B

# FIG 3

FIG 4

FIG 5

# FIG 6A

MSM

MFTK_2

KQ_1

FQ_1   D1   VT_1   VT_2   FS_1

MFTK_1   KS_1

VA_1

z.B. Zellsuspension

# FIG 6B

EP 4 122 604 A2

# FIG 6C

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- EP 2248588 A1
- DE 102011088741 A1
- EP 2156890 A2
- WO 2007071374 A
- WO 2020025679 A1
- DE 102009020449
- EP 2156890 A
- WO 2020025679 A